(19) Europäisches Patentamt

European Patent Office

Office européen des brevets

(11) **EP 4 760 252 A1**

(12) **EUROPEAN PATENT APPLICATION**
published in accordance with Art. 153(4) EPC

(43) Date of publication:
**17.06.2026 Bulletin 2026/25**

(21) Application number: **24851442.4**

(22) Date of filing: **26.06.2024**

(51) International Patent Classification (IPC):
*G01N 27/62* (2021.01)

(52) Cooperative Patent Classification (CPC):
**G01N 27/62**

(86) International application number:
**PCT/JP2024/023193**

(87) International publication number:
**WO 2025/033010 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 JP 2023129917**

(71) Applicant: **National Institute for Materials Science Tsukuba-shi, Ibaraki 305-0047 (JP)**

(72) Inventors:
• **NAITO Masanobu**
  **Tsukuba-shi, Ibaraki 305-0047 (JP)**
• **HIBI Yusuke**
  **Tsukuba-shi, Ibaraki 305-0047 (JP)**

(74) Representative: **J A Kemp LLP**
**80 Turnmill Street**
**London EC1M 5QU (GB)**

(54) **COMPOSITION ESTIMATION METHOD, COMPOSITION ESTIMATION DEVICE, PROGRAM, SAMPLE CONTAINER, AND THERMOGRAVIMETRY/MASS SPECTROMETRY METHOD**

(57) A composition estimation method includes acquiring first data including a change in mass of a sample and second data including a mass spectrum of gas components in the sample, using non-negative matrix factorization to decompose the second data into the product of a basis spectrum matrix and an intensity distribution matrix, correcting, on the basis of the first data, an effect of differences in ionization efficiency for each of the gas components reflected in the intensity distribution matrix to obtain a second intensity distribution matrix serving as a mass standard, decomposing the second intensity distribution matrix using non-negative matrix factorization into the product of a matrix containing mass fractions of a virtual sample in each sample and a matrix including feature vectors of the virtual sample, setting a (K-1)-simplex that encompasses all the feature vectors and that has the feature vectors as endmembers, and estimating the respective content ratios of the constituent elements in the sample from a ratio of distances between the K-number of endmembers and the feature vectors of the sample. According to this method, the problem of the accuracy and/or reproducibility in conventional methods can be improved.

FIG.1

```
START
  │
ACQUIRE FIRST DATA AND SECOND DATA ── S1
  │
CORRECT SECOND DATA USING STANDARD
SAMPLE DATA ── S2
  │
FIRST NMF PROCESS ── S3
  │
CORRECT INTENSITY DISTRIBUTION MATRIX
USING FIRST DATA ── S4
  │
SECOND NMF PROCESS ── S5
  │
PROJECT VECTOR ── S6
  │
ESTIMATE CONTENT RATIO OF
CONSTITUENT ELEMENTS ── S7
  │
END
```

EP 4 760 252 A1

## Description

Technical Field

The present disclosure relates to a composition estimation method, a composition estimation device, a program, a sample container, and a thermogravimetry-mass spectrometry method.

Background Art

As a method (composition estimation method) for estimating the content ratio of constituent elements in a sample that contains (or is likely to contain) a plurality of constituent elements (e.g., components), Patent Document 1 discloses a reference-free quantitative MS (RQMS) technology based on mass spectra obtained by using a mass spectrometer.

Prior Art

Patent Literature

Patent Document 1: WO2022/270289

Summary

Technical Problem

The technology disclosed in Patent Document 1 was groundbreaking in enabling the estimation of the composition of unknown samples based on mass spectra obtained under ambient conditions, which were previously considered to have low quantifiability, by employing one or two rounds of NMF (Non-Negative Matrix Factorization) processing. However, the inventors considered that while the method described in Patent Document 1 was original and excellent, there remained room for improvement in terms of accuracy and reproducibility.
The present disclosure aims to improve accuracy and/or reproducibility in a conventional method.

Solution to Problem

One embodiment of a composition estimation method disclosed herein is a composition estimation method for estimating a content ratio of one or more and K or less types of constituent elements in a sample, K being an integer of two or more, the method including: for each of a plurality of the samples, measuring at least a change in mass of the sample while varying a temperature of the sample, sequentially ionizing resulting gas components, and acquiring first data and second data correlated with each other by time or temperature, the first data including the change in mass of the sample, and the second data including a mass spectrum of each of the gas components in the sample; performing a first NMF process of decomposing the second data into the product of a basis spectrum matrix and an intensity distribution matrix using non-negative matrix factorization; correcting, on the basis of the first data, an effect of differences in ionization efficiency for each of the gas components reflected in the intensity distribution matrix to obtain a second intensity distribution matrix serving as a mass standard; performing a second NMF process of decomposing the second intensity distribution matrix using non-negative matrix factorization into the product of a matrix containing mass fractions of a virtual sample, in each sample, composed solely of one type of constituent element and a matrix including feature vectors of the virtual sample; setting a (K-1)-simplex that encompasses all the feature vectors and that has the feature vectors as endmembers; and estimating the respective content ratios of the constituent elements in the sample from a ratio of distances between the K-number of endmembers and the feature vectors of the sample.
Another embodiment of a composition estimation method disclosed herein is a composition estimation method for estimating a content ratio of one or more and K or less types of constituent elements in a sample, K being an integer of two or more, the method including: for each of a plurality of the samples, measuring at least a change in mass of the sample and a standard sample while varying temperatures of the sample and the standard sample, sequentially ionizing resulting gas components, and acquiring first data and second data correlated with each other by time or temperature, the first data including the change in mass of the sample, and the second data including a mass spectrum of each of the gas components in the sample; acquiring standard sample data including the change in mass of the standard sample and a mass spectrum of the standard sample, correlated with each other by time or temperature; and estimating the content ratio of the constituent elements in the sample by correcting the second data on the basis of the standard sample data and using the first data and the second data after correction.
One embodiment of a composition estimation device disclosed herein is a composition estimate device configured to estimate a content ratio of one or more and K or less types of constituent elements in a sample, K being an integer of two or more, the device including: an information acquisition unit configured to measure, for each of a plurality of the samples, at least a change in mass of the sample while varying a temperature of the sample, sequentially ionizing resulting gas components, and acquiring first data and second data correlated with each other by time or temperature, the first data including the change in mass of the sample, and the second data including a mass spectrum of each of the gas components in the sample; a first NMF processing unit configured to perform a first NMF process of decomposing the second data into the product of a basis spectrum matrix and an intensity distribution matrix using non-negative matrix factorization; a data correction unit configured to correct, on the basis of the first data, an effect of differences in ionization efficiency for each of the gas components reflected in the intensity distribution matrix to obtain a second intensity distribution matrix serving as a mass standard; a second NMF processing unit configured to perform a second NMF process of decomposing the second intensity distribution matrix using non-negative matrix factorization into the product of a matrix representing mass fractions of a virtual sample, in each sample, composed solely of one type of constituent element and a matrix representing feature vectors of the virtual sample; a vector projection unit configured to set a (K-1)-simplex that encompasses all the feature vectors and that has the feature vectors as endmembers; and a composition estimation unit configured to estimate the respective content ratios of the constituent elements in the sample from a ratio of distances between the K-number of endmembers and the feature vectors of the sample.

One embodiment of a sample container disclosed herein is a sample container to be used in a thermogravimetry-mass spectrometry method of measuring at least a change in mass of a sample by varying a temperature of the sample and ionizing resulting gas components for mass spectrometry analysis, the sample container including: a body including a circular base portion, and a cylindrical side portion erected from an outer periphery of the base portion and having an open top portion; a layer portion being a disc-like plate member substantially concentric with the side portion, the plate member being disposed so as to close an open portion of the side portion at a midpoint along the height of the side portion, and having a downwardly concave portion formed at its center; a first sample chamber defined by an upper face of the base portion, an inner face of the side portion, and a lower face of the layer portion; and a second sample chamber defined by an upper face of the layer portion and an inner face of the side portion.

Effects of Invention

With the present disclosure, it is possible to improve accuracy and/or reproducibility in a conventional method.

Brief Description of Drawings

FIG. 1 is a flowchart illustrating a first embodiment of a composition estimation method.
FIG. 2 is a partial cross-sectional view for explaining the configuration of a multilayer container.
FIG. 3 is a flowchart illustrating a second embodiment of the composition estimation method.
FIG. 4 is a functional block diagram illustrating an embodiment of a composition estimation device.
FIG. 5 is a graph showing the effect of MS intensity correction using a standard sample.
FIG. 6A shows composition estimation results when second data is not corrected using TG data (comparative example).
FIG. 6B shows composition estimation results when second data is corrected using TG data (example).
FIG. 6C is a log-scale plot taken along the M-S edge in FIG. 6B.
FIG. 6D shows the results of predicting mass spectra of a sample containing only one type of component (E, M, S) from feature vectors corresponding to the vertex of a simplex defined (learned) in FIG. 6B, and comparing them with measured data.
FIG. 7 is a flowchart illustrating a modification example of the first embodiment of the composition estimation method.
FIG. 8 is a configuration diagram illustrating a policy proposal device.
FIG. 9 is a configuration diagram illustrating an automatic preparation device.

Description of Embodiments

The following description is based on non-limiting embodiments.
Herein, a numerical range expressed using the word "to" denotes a range that includes the numerical values stated before and after the word "to" as the lower and upper limits, respectively.
A first embodiment of a composition estimation method disclosed herein is a composition estimation method for estimating a content ratio of one or more and K or less types of constituent elements in a sample, K being an integer of two or more, the method including: for each of a plurality of the samples, measuring at least a change in mass of the sample while varying a temperature of the sample, sequentially ionizing resulting gas components, and acquiring first data and second data correlated with each other by time or temperature, the first data including the change in mass of the sample, and the second data including a mass spectrum of each of the gas components in the sample; performing a first NMF process of decomposing the second data into the product of a basis spectrum matrix and an intensity distribution matrix using non-negative matrix factorization; correcting, on the basis of the first data, an effect of differences in ionization efficiency for each of the gas components reflected in the intensity distribution matrix to obtain a second intensity distribution matrix serving as a mass standard; performing a second NMF process of decomposing the second intensity distribution matrix using non-negative matrix factorization into the product of a matrix containing mass fractions of a virtual sample, in each sample, composed solely of one type of constituent element and a matrix including feature vectors of the virtual sample; setting a (K-1)-simplex that encompasses all the feature vectors and that has the feature vectors as endmembers; and estimating the respective content ratios of the constituent elements in the sample from a ratio of distances between the K-number of endmembers and the feature vectors of the sample.

When ionizing the gas components generated when the sample is heated and performing mass spectrometry, the quantity (mass) of the generated gas components does not necessarily correlate well with the intensity of the mass spectrum. For example, gas components with low ionization efficiency may not produce a strong signal intensity in the mass spectrum even when present in large quantities (large mass). On the other hand, gas components with high ionization efficiency may produce a strong signal intensity in the mass spectrum even when present in small quantities (small mass). Composition estimation using conventional methods is susceptible to the influence of the latter (e.g., trace impurities with high ionization efficiency), making it difficult to ensure quantitative accuracy and resulting in insufficient precision in some cases.

In contrast, the composition estimation method of the first embodiment corrects the intensity distribution matrix using first data that includes changes in mass in response to changes in temperature (typically mass decrease upon heating) and converts it to a mass-based standard. This reduces the impact of differences in ionization efficiency (ionization coefficient) between gas components. Consequently, quantifiable accuracy increases, improving the precision of composition estimation.

A second embodiment of the composition estimation method disclosed herein is the first embodiment, further including, before performing the first NMF process, measuring at least a change in mass of a standard sample while varying a temperature of the standard sample, sequentially ionizing resulting gas components, and acquiring standard sample data including the change in mass of the standard sample and a mass spectrum of the standard sample, correlated with each other by time or temperature, and correcting the second data on the basis of the standard sample data.

Spectral intensities obtained by mass spectrometry may be affected not only by the efficiency of ionizing the gas components but also by factors such as temperature and vacuum level within the mass spectrometer, as well as the environmental conditions of the test room (temperature, humidity, airborne impurities). The composition estimation method of the second embodiment includes a step of acquiring the change in mass and mass spectrum of the standard sample under the same conditions as the sample, and correcting the second data containing the mass spectrum of the sample based on this. Correcting the second data that includes the mass spectrum using the standard sample data reduces inter-instrument and inter-laboratory errors arising from the combined effects of hardware factors and environmental factors, thereby enhancing reproducibility.

The term "reproducibility" herein is used primarily in two senses. One is that high accuracy is obtained even when the data (dataset) acquired in one laboratory using one set of hardware is reapplied to composition estimation of sample spectra obtained in another laboratory and/or using another set of hardware. Specifically, it means that highaccuracy estimation results are obtained even when projecting feature vectors derived from target samples for estimation acquired in other environments onto simplexes defined (learned) by a reference sample set (described below).

This also includes achieving high estimation accuracy when combining results from different devices into a single dataset (for sample composition estimation).

Reproducibility in this sense is particularly important, for example, in sequence analysis of polymers having polyads as components. When the composition estimation method has high reproducibility, when a dataset (or simplex) for a given combination of monomers is published, higher accuracy can be achieved when using this published dataset for sequence analysis of new polymers synthesized from that monomer combination in other laboratories and/or using other hardware. Such a highly reproducible composition estimation method can become one of the most effective techniques for accelerating research by many scientists.

The other meaning of reproducibility as used herein can be rephrased as longterm data stability. Specifically, this also means that by correcting for hardware factors (e.g., mass spectrometers) and laboratory environmental factors using measurement results from standard samples (preferably substances with known gasification temperatures and chemical structures), higher accuracy can still be achieved when datasets created at different times (e.g., in the past) are used to estimate the composition of spectra from new samples (target samples to be estimated) or to expand the dataset (by adding new reference samples at a later time).

A third embodiment of the composition estimation method disclosed herein is the second embodiment, in which the correcting is performed using a ratio Ws/Is of a signal intensity Ws derived from the change in mass of the standard sample to a signal intensity Is of the mass spectrum of the standard sample.

The ratio Ws/Is obtained from the standard sample data strongly correlates with the ionization efficiency of the standard sample under a given environment. When the same substance is used as the standard sample, these values should inherently be identical. However, as described above, the values may vary due to a combination of factors related to hardware, environment, and other influences. Correcting the second data (the two-dimensional mass spectrum of the sample) acquired under the same conditions based on these values makes it easy to suppress these combined effects, leading to higher reproducibility.

A fourth embodiment of the composition estimation method disclosed herein is a composition estimation method for estimating a content ratio of one or more and K or less types of constituent elements in a sample, K being an integer of two or more, the method including: for each of a plurality of the samples, measuring at least a change in mass of the sample and a standard sample while varying temperatures of the sample and the standard sample, sequentially ionizing resulting gas components, and acquiring first data and second data correlated with each other by time or temperature, the first data including the change in mass of the sample, and the second data including a mass spectrum of each of the gas components in the sample; acquiring standard sample data including the change in mass of the standard sample and a mass spectrum of the standard sample, correlated with each other by time or temperature; and estimating the content ratio of the constituent elements in the sample by correcting the second data on the basis of the standard sample data and using the first data and the second data after correction.

As described above, the spectral intensity obtained by mass spectrometry can be affected not only by ionization efficiency but also by factors such as the temperature and vacuum level inside the mass spectrometer, and the environmental conditions of the testing room (temperature, humidity, airborne impurities, etc.). The composition estimation method of the fourth embodiment includes a step of acquiring the change in mass and mass spectrum of a standard sample under the same conditions as the sample, and correcting the second data containing the mass spectrum of the sample based on this. Correcting the second data that includes the mass spectrum using the standard sample data reduces inter-instrument and inter-room errors caused by a combination of hardware factors and environmental factors, thereby improving reproducibility.

A fifth embodiment of the composition estimation method disclosed herein is the fourth embodiment, in which the estimating the content ratio of the constituent elements includes: performing a first NMF process of decomposing the second data after correction into the product of a basis spectrum matrix and an intensity distribution matrix using non-negative matrix factorization; performing a second NMF process of decomposing the intensity distribution matrix using non-negative matrix factorization into the product of a matrix representing mass fractions of a virtual sample, in each sample, composed solely of one type of constituent element and a matrix representing feature vectors of the virtual sample; setting a (K-1)-simplex that encompasses all the feature vectors and that has the feature vectors as endmembers; and estimating the respective content ratios of the constituent elements in the sample from a ratio of distances between the K-number of endmembers and the feature vectors of the sample.

The fifth embodiment is a composition estimation method in which each step involves reference-free quantitative MS (RQMS). Adding a step to correct the second data on the basis of the standard sample data further enhances reproducibility. Specifically, conventional RQMS (Patent Document 1) performed under ambient conditions makes it difficult to reuse data (data sets) acquired using one hardware system for compositional estimation of sample spectra obtained in another laboratory and/or using different hardware, to estimate the composition of new sample spectra using data sets created at different times (e.g., in the past), or to extend the data sets (by adding data). The fifth embodiment enables all of the above through the step of correcting the second data using standard sample data.

A sixth embodiment of the composition estimation method disclosed herein is any one of the second to fifth embodiments, in which the standard sample is a substance with a boiling point or a decomposition temperature lower than a gasification temperature of the sample.

When the standard sample is a substance that vaporizes or decomposes to gasify at a temperature lower than other samples, the signals obtained from the sample (or the gas generated from the sample) are less likely to overlap with the signals obtained from the standard sample. This facilitates the separation and analysis of the two types of signals and further improves the accuracy of composition estimation.

For example, when acquiring data while heating at a constant rate, the signal derived from the standard sample is obtained first, followed by the signal derived from the sample after a certain period of time has elapsed. Thus, separating and analyzing the two becomes easier and more accurate, and the precision of composition estimation increases.

A seventh embodiment of the composition estimation method disclosed herein is the sixth embodiment, in which the change in mass of the sample and the change in mass of the standard sample are measured by placing the sample and the standard sample in a container not in direct contact with each other and while varying the temperature of the sample and the standard sample simultaneously.

Simultaneously measuring the sample and the standard sample reduces the time required for measurement and can also contribute to improved accuracy by serving as a so-called "internal standard." Further, since the sample and the standard sample do not come into direct contact with each other, even when measured simultaneously, they are less likely to interfere with each other and less likely to cause unintended reactions. Consequently, the acquired signal becomes more accurate, leading to higher precision in composition estimation.

An eighth embodiment of the composition estimation method disclosed herein is the seventh embodiment, in which the container is a stacked multi-layer container, and the sample and the standard sample are placed on different layers of the multi-layer container.

In the stacked multi-layer container, the sample and the standard sample can be easily accommodated such that they do not come into direct contact with each other. When the sample container has at least two layers, the sample can be placed on one layer and the standard sample can be placed on the other layer. The standard sample may be placed on either layer but is preferably placed on the uppermost layer (top layer). This is particularly preferable when using hardware where the bottom surface of the container is heated.

When the boiling point/decomposition temperature (gasification temperature) of the standard sample placed on the uppermost layer is appropriately selected relative to the sample, the standard sample gasifies first during the heating process. Since the standard sample gasifies before the sample, interference from gases originating from the sample is more effectively suppressed, making it easier to achieve higher accuracy in composition estimation.

Further, when using hardware where the bottom surface of the container is heated, heat is more readily transferred to the sample placed on the lower layer (side opposite the bottom face). Even without heating from the bottom face, heat transfer to a sample on the lower layer may be more efficient if the container is made of metal, for example.

When the sample is placed on the lower layer and heat transfer is more efficient than for the standard sample on the upper layer, the acquired first data and second data tend to be more accurate. Specifically, the set temperature or measured temperature of the hardware is more likely to align closely with the sample's true temperature.

For standard samples, since their physical properties are known, even if there is a certain degree of deviation between the measured temperature (the recorded temperature) and the true temperature of the standard sample, the corresponding mass decrease and the mass spectrum are typically paired (the temperature value is primarily used only to ensure the detection timing of both matches). Therefore, the impact of the deviation from the true value on accuracy or data interpretation is generally smaller.

A ninth embodiment of the composition estimation method disclosed herein is any of the first to eighth embodiments, in which the sample is a mixture composed of the constituent elements.

Generally, when estimating the composition of a multi-component mixture, that is, when quantifying each component, it has been considered necessary to have a reference, namely, the measurement results of each component itself (pure component, reference). RQMS is a groundbreaking method that overturns conventional technical wisdom and compensates for this shortcoming. The composition estimation method of this embodiment enables high-precision composition estimation using a sample that is a mixture composed of a plurality of components.

A first embodiment of a composition estimation device disclosed herein is a composition estimate device configured to estimate a content ratio of one or more and K or less types of constituent elements in a sample, K being an integer of two or more, the device including: an information acquisition unit configured to measure, for each of a plurality of the samples, at least a change in mass of the sample while varying a temperature of the sample, sequentially ionizing resulting gas components, and acquiring first data and second data correlated with each other by time or temperature, the first data including the change in mass of the sample, and the second data including a mass spectrum of each of the gas components in the sample; a first NMF processing unit configured to perform a first NMF process of decomposing the second data into the product of a basis spectrum matrix and an intensity distribution matrix using non-negative matrix factorization; a data correction unit configured to correct, on the basis of the first data, an effect of differences in ionization efficiency for each of the gas components reflected in the intensity distribution matrix to obtain a second intensity distribution matrix serving as a mass standard; a second NMF processing unit configured to perform a second NMF process of decomposing the second intensity distribution matrix using non-negative matrix factorization into the product of a matrix representing mass fractions of a virtual sample, in each sample, composed solely of one type of constituent element and a matrix representing feature vectors of the virtual sample; a vector projection unit configured to set a (K-1)-simplex that encompasses all the feature vectors and that has the feature vectors as endmembers; and a composition estimation unit configured to estimate the respective content ratios of the constituent elements in the sample from a ratio of distances between the K-number of endmembers and the feature vectors of the sample.

In a method of ionizing the gas components generated when the sample is heated, acquiring a mass spectrum by a mass spectrometer, and using this mass spectrum to estimate the composition of an unknown sample, there have been problems in improving the accuracy of this process. This is because the amount of gas components generated by heating, i.e., the amount (mass) of a certain constituent present in the sample, and the intensity of the mass spectrum derived therefrom, do not always show a good correlation.

The composition estimation device of the first embodiment can solve this problem through the function of the data correction unit. The data correction unit corrects the intensity distribution matrix obtained by the first NMF processing unit using the first data including the change in mass of the sample. The intensity distribution matrix is acquired by performing non-negative matrix factorization on the second data set, which includes the mass spectra of gas components generated from the sample. This reflects the influence of differences in ionization efficiency among gas components. That is, even trace components in the sample (components with low mass fractions) may appear as large values (strong signal intensities) in the mass spectrum if they possess high ionization efficiency.

The data correction unit converts the intensity distribution matrix to a mass-based standard using the first data representing change in mass (typically mass decrease due to heating) in response to a change in temperature.

Since the first data reflects the mass ratio (amount present) of each constituent element in the sample, correction using this data reduces the influence of differences in ionization efficiency (ionization coefficient) for each gas component within the intensity distribution matrix. This enhances quantitative accuracy, enabling precise composition estimation according to the composition estimation device of the first embodiment.

A second embodiment of the composition estimation device disclosed herein is any of the first to third composition estimation devices, further including a standard correction unit configured to, before the first NMF process is performed, measure at least a change in mass of a standard sample while varying a temperature of the standard sample under the same conditions as those for the plurality of samples, sequentially ionize resulting gas components, and correct the second data on the basis of standard sample data including the change in mass of the standard sample and a mass spectrum of the standard sample, correlated with each other by time or temperature.

Spectra obtained by mass spectrometers are generally influenced not only by factors such as the ionization efficiency of samples but also by temperature and vacuum level inside the device, and the environmental conditions of the testing room (temperature, humidity, airborne impurities). These influences are often complex, and it is often difficult to isolate individual factors and find solutions for each one. Therefore, conventionally, attempts were made to avoid these problems caused by complex factors to the extent possible, such as by performing a long pre-run before measuring the sample (run).

On the other hand, the composition estimation device of the second embodiment includes the standard correction unit, and the function of the standard correction unit makes it possible to solve said issues.

The standard correction unit has a function of correcting the second data, which includes the mass spectrum of the sample, on the basis of the change in mass and mass spectrum (standard sample data) acquired under the same conditions as the that of the sample for the standard sample.

Correcting the second data including the mass spectrum using the standard sample data reduces inter-device and inter-room errors caused by a combination of hardware factors and environmental factors, thereby improving reproducibility.

A first embodiment of a program disclosed herein is a program executed by a computer to function as the composition estimate device of the first or second embodiment described above.

When the computer functioning as a composition estimation device via the program of the first embodiment is used as a controller for a known thermogravimetry-mass spectrometer (TG-MS), it can simultaneously perform device control and composition estimation. Further, the computer can also analyze data obtained by the thermogravimetric mass spectrometer. In this case, the computer need not possess control functions for the thermogravimetric mass spectrometer.

A first embodiment of a sample container disclosed herein is a sample container to be used in a thermogravimetry-mass spectrometry method of measuring at least a change in mass of a sample by varying a temperature of the sample and ionizing resulting gas components for mass spectrometry analysis, the sample container including: a body including a circular base portion, and a cylindrical side portion erected from an outer periphery of the base portion and having an open top portion; a layer portion including a disc-like plate member substantially concentric with the side portion, the plate member being disposed so as to close an open portion of the side portion at a midpoint along the height of the side portion, and having a downwardly concave portion formed at its center; a first sample chamber defined by an upper face of the base portion, an inner face of the side portion, and a lower face of the layer portion; and a second sample chamber defined by an upper face of the layer portion and an inner face of the side portion.

The sample container is a layered container and includes at least the first sample chamber and the second sample chamber. The first sample chamber and the second sample chamber are disposed so as to close an open portion of the side portion at a midpoint along the height of the side portion. Therefore, the first sample chamber and the second sample chamber can each accommodate separate samples without direct contact between them.

For example, when the standard sample is placed in one sample chamber and the sample subject to composition estimation is placed in the other sample chamber, problems potentially caused by these two samples mixing (such as unintended reactions or responses to heat) can be easily avoided.

The sample container may further include a lid to close the open portion at the top of the body. Note that the term "close" does not necessarily imply airtightness and the lid need only fit with a gap allowing passage of gases generated by the sample contained in the first sample chamber.

A first embodiment of a thermogravimetry-mass spectrometry method is a thermogravimetry-mass spectrometry method of measuring at least a change in mass of a sample by varying a temperature of the sample and ionizing resulting gas components for mass spectrometry analysis, the method including: placing a standard sample in one of the first sample chamber and the second sample chamber of the sample container of the first embodiment; placing a sample in the other of the first sample chamber and the second sample chamber; and performing measurement by varying a temperature of the standard sample and a temperature of the sample in the first sample chamber and the second sample chamber.

Conventionally, open or lidded cylindrical sample containers, sometimes called sample pans, are often used in thermogravimetry-mass spectrometry methods. These sample containers are made of metal (or, in special cases, alumina or quartz). Samples are placed in these containers for testing.

In the thermogravimetry-mass spectrometry method of the first embodiment, both the test sample and the standard sample are placed together in the sample container for testing. The standard sample data obtained in this way is useful for correcting the mass spectrum obtained from the test sample and the intensity distribution matrix obtained by NMF processing of the mass spectrum.

By using the layered sample container and placing the standard sample in one sample chamber and the sample in the other sample chamber, problems potentially caused by these two samples mixing (such as unintended reactions or thermal responses) are easily avoided, resulting in more accurate data.

(Definition of Terms)

The following description explains the terms used herein. Terms not explained below are used in the sense commonly understood by a person having skill in the art.

Herein, the term "constituent element" refers to either a "component," which is a substance constituting each sample being a mixture, or a "polyad," which is constituted by a sequence of monomer units in a polymer. In other words, when the "constituent element" is a "component," the sample is a mixture; when the "constituent element" is a "polyad," the sample is a polymer.

Note that, estimation of the composition of a polymer when the constituent element is a polyad can also be referred to as "sequence analysis".

A "unit" refers to a structural part of a polymer derived from a monomer. For example, for polyvinyl chloride $(CH_2CHCl)_n$ synthesized by the polymerization of vinyl chloride ($CH_2$=CHCl), vinyl chloride corresponds to the "monomer", polyvinyl chloride corresponds to the "polymer", and $CH_2CHCl$ corresponds to the "unit".

A "monomer" refers to a compound (monomer) used in the synthesis of a polymer being a sample. The "polymer" being a sample is synthesized from one or more monomers selected from a monomer set consisting of a predetermined number (and predetermined number of types) of monomers. A polyad, which is a constituent element of the polymer, is a combination of multiple units, and the monomer set contains multiple monomers. However, the polymer may also be a homopolymer synthesized by selecting a single type of monomer from the monomer set.

A "homopolymer" includes either a polymer actually composed solely of one type of unit or a polymer that is estimated to be (appears to be) composed solely of one type of unit based on mass spectra. That is, even if a polymer is estimated to be composed solely of one type of unit based on mass spectra but actually contains other units below the detection limit, it is treated as a "homopolymer" herein. The same treatment applies to reference samples.

A "polyad" refers to a partial structure of a polymer composed of a finite number of arranged units. For example, possible polyads in a polymer synthesized from monomers 1 and 2 include diads such as 11, 22, and 12 (or 21); and triads such as 112.

Polyads are a constituent element used for estimating composition. Estimating the composition of a polymer refers to estimating the types of polyads in the sample to be measured and their mass-based content.

The "number of units constituting a polyad" is 2 when, in the above example, the diads are 11, 22, or 12 (21), and 3 when, for example, the diads are 111, 112, 221, 222, or 121 (212). Note that in the following description, the "number of units constituting a polyad" may sometimes be referred to simply as the "length of the polyad."

The "number of variants of a polyad" refers to the combination variations of the units within the polyad. For example, if the number of monomer types in a monomer set is 3 (monomers 1, 2, and 3) and the number of units constituting the polyad (the polyad length) is 3 (a triad), the number of variants of the triad is 111, 222, 333, 113, 13{13}, 331, 221, 12{12}, 112, 223, 23{23}, 233, and 123. Note that "13{13}" denotes a repetition of "13". Note that, while a repeating "13" can also be represented as "131" or "313" for a triad, it is denoted as "13{13}" to distinguish it from the different sequences "113{113}" and "331{331}". The same applies to other instances.

The number of variants of a polyad is uniquely determined by the number of possible combinations based on the length of the polyad and the number of monomer types in the monomer set. However, depending on factors such as the monomer types and polymerization conditions, some polyad variants may exist theoretically but cannot occur in practice. For example, if monomers 1 and 2 do not form an alternating copolymer, "12{12}" exists as a theoretical combination but cannot occur in practice. Therefore, the number of variants of a polyad is the number of combinations uniquely determined by the length of the polyad and the number of monomer types in the monomer set, and is a number less than or equal to this.

When the constituent element is a polyad, the number of variants of the polyad is K.

A "sample" may contain 1 to K types of constituent elements. Note that, K is not particularly limited as long as it is 2 or more, preferably 1000 or less, more preferably 100 or less, and most preferably 10 or less.

Typically (corresponding to a first embodiment described below), a plurality of samples includes at least one "target sample for estimation." The plurality of samples may also include one or more "reference samples." The target sample for estimation and the reference sample of the plurality of samples need not be labeled individually (i.e., they need not be distinguishable). Further, as long as they contain 1 to K types of constituent elements, their compositions may all be unknown. Note that the "new sample" used in Example 2 described below corresponds to a target sample for estimation.

For example, the composition of each sample can be estimated by using a sample set (multiple samples). In this case, each sample may be considered the target sample for estimation, but may also function as a reference sample. The phrase "may also function" here means that the reference samples must be mutually distinct; if identical, only one can function as a reference sample.

Further, when a sample set is used to set up (train) a simplex (described below) and then project a feature vector of a "new sample" onto that simplex to estimate its composition, each sample in the sample set used for training the simplex may be considered the reference sample, while the latter sample (the new sample) may be considered the target sample for estimation.

That is, herein, the term "target sample for estimation" refers to a sample whose constituent element-specific content is to be estimated, while "reference sample" refers to a sample used for setting (training) the simplex, which is not a target of composition estimation. Although both the reference sample and the target sample ultimately have their compositions estimated, the sample that is the target of composition estimation is conveniently termed the "target sample for estimation."

When the target sample for estimation is a mixture, the target sample may be a mixture of 1 to K types of constituent elements selected from K (two or more) types of constituent elements.

When the target sample for estimation is a polymer whose sequence is to be estimated, the target sample consists of one or more types of two or more monomers included in the sample set. The types and quantities of the monomers used in synthesis may both be unknown. The target sample for estimation may also be a homopolymer composed of a single monomer.

The reference sample refers to the sample necessary for determining the K number of endmembers of a (K-1)-simplex (K minus one simplex) to be described below. Unless a predefined simplex is used, the target sample can also serve as one of the reference samples. Like the target sample for estimation, the reference sample is a sample containing 1 to K types of constituent elements selected from K types of constituent elements.

Note that the reference samples may include a sample with the same composition as the target sample. That is, the target sample for estimation and the reference sample may be identical, but each reference sample must be different from other reference samples. Here, "different" means that at least one type selected from the group consisting of the types of constituent elements in the reference samples and the relative amounts of the constituent elements is different.

The composition of the reference sample may be known in advance, but need not be known to perform composition estimation of the target sample.

When the constituent element is a polyad, the reference sample is a polymer synthesized from one type or two or more types of monomers selected from the sample set.

The reference sample contains at least one or more types of polyads selected from K types of polyads. The number of polyad types in the reference sample is not particularly limited and may be between 1 and K types. The reference samples may also contain a reference sample with the same composition as the target sample for estimation. That is, the target sample for estimation and the reference sample may be identical, but each reference sample is different from other reference samples.

In this context, "different" means that at least one type selected from the group consisting of the types of units in the reference sample and the sequence of units is different.

An "endmember" refers to a vector corresponding to a vertex of a (K-1)-simplex. The endmember corresponds to a feature vector of a virtual sample composed solely of one type of constituent element from among K types.

The reference sample may have the same composition as the virtual sample. That is, a sample containing only one of the K types of constituent elements may itself be the reference sample. However, as will be evident from the results of the verification tests to be described below, the composition estimation method disclosed herein does not require data from a reference (a sample containing only one type of constituent element), and such a reference sample is unnecessary for composition estimation.

Particularly when the constituent element is a polyad, polymers containing only one type may be impractical to prepare due to factors such as difficulty of synthesis. Therefore, while the reference sample may have the same composition as the virtual sample, the reference sample need not have the same composition as the virtual sample to perform composition estimation for the target sample.

(Composition Estimation Method: First Embodiment)

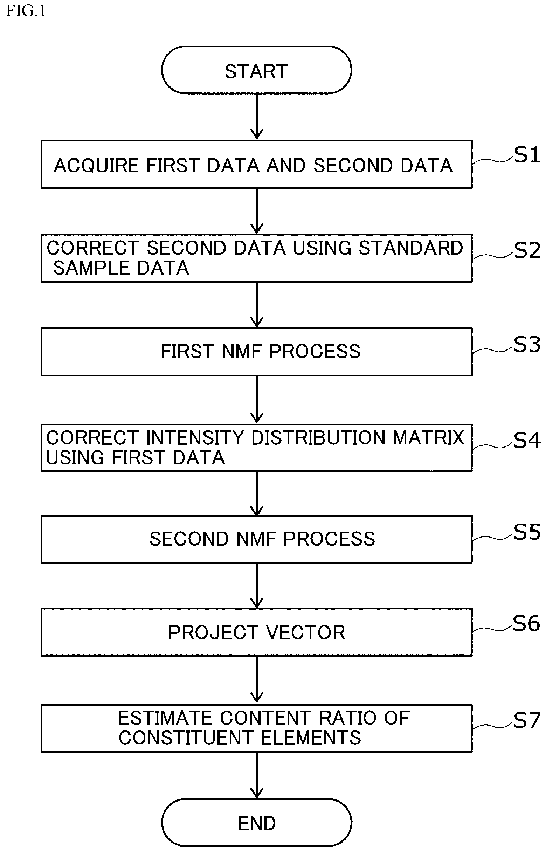

FIG. 1 is a flowchart illustrating a first embodiment of a composition estimation method. The sample in the first embodiment is a sample (mixture) that may contain 1 to K types of components. That is, the sample is a mixture containing 1 to K components selected from a known set of K components in arbitrary mass ratios.

First, in step S1, first data and second data are acquired for a plurality of samples and for a standard sample, respectively. Note that in the flowchart of FIG. 1, measurement values (standard sample data) are acquired for both the samples and the standard sample. However, no limitation is intended, and measurement values for only the samples may also be acquired.

The number of the samples to be measured is not particularly limited. When there are K types of constituent elements (components), it is preferable that there are at least K different types of samples. That is, it is preferable that at least K different types of samples are provided for measurement. K may be 1 or greater, with the upper limit not particularly limited. As an example, it is preferable that K is 1000 or less.

The ratio of the number of target samples for estimation to the number of reference samples among the K types of samples is not particularly limited. However, in this embodiment, at least one target sample should be provided. That is, of the samples included in the plurality of samples (sample set), at least one sample should be the sample for which composition estimation is performed. Note that, the composition of the target sample and the composition of each reference sample may be identical, but it is preferable that the compositions of the reference samples differ from each other.

Therefore, when the target sample for estimation and the reference samples are all different samples, it is preferable that the number of samples to be measured be K types or more. On the other hand, when the target sample for estimation has the same composition as one of the reference samples, it is preferable that K types or more of only the reference samples be provided. That is, it is preferable that the target sample for estimation and the reference sample together comprise K types or more overall.

In step S1, the change in mass of the sample is measured while varying the temperatures of the sample and the standard sample, the resulting gas components are sequentially ionized, and the first data and second data are acquired for each sample.

The method of acquiring the first data and the second data is not particularly limited. It is preferable to use a thermogravimetry-mass spectrometer. A thermogravimetry-mass spectrometer is a device capable of performing thermogravimetric analysis and mass spectrometry continuously. More specifically, a thermogravimetry-mass spectrometer is a device capable of introducing gas generated by the thermogravimetric measurement of the sample into the mass spectrometer in real time to acquire a mass spectrum.

The thermogravimetry-mass spectrometer may be constructed as a modular system including a commercially available thermogravimetric analysis device and a mass spectrometry device. Typically, a thermogravimetric analysis module and a mass spectrometry module are connected in series to form a single system. Further, when the modular system includes a thermogravimetric analysis device having differential thermal analysis (DTA) functionality, the system may be configured to acquire DTA measurement data in addition to thermogravimetric (TG) measurement data.

Each module may be a commercially available device used with or without necessary modification. The method of ionizing the gas generated in the mass spectrometer is not particularly limited and may be electron (impact) ionization (EI), chemical ionization (CI), field ionization (FI), or photoionization (PI). Additionally, ionization methods using a "DART" (Direct Analysis in Real Time; registered trademark) ion source may be used.

The ionization method can be selected according to the sample, or other factors. For example, when the sample is a polymer, methods such as CI, FI, PI, and DART are preferred because ionization is easy while polyads are left intact (not caused to decompose to monomers).

The method of mass spectrometry is not particularly limited, and known methods can be used. Thus, the mass spectrometer is not particularly limited, and any device capable of performing the above method can be used.

Examples of mass spectrometry methods (mass spectrometers) include quadrupole, ion trap, time-of-flight, and magnetic field methods, and combinations thereof (typically tandem types) may also be used. Of these, time-of-flight type mass spectrometers are preferred for their capability to analyze precise mass.

The method for introducing the sample and the standard sample into the thermogravimetry-mass spectrometer is not particularly limited. It is preferable to introduce one type of sample and one standard sample simultaneously. As described below, the standard sample is used to correct the second data of the sample. By simultaneously measuring the standard sample with each sample measurement and correcting the second data each time by using the obtained standard sample data, errors arising from hardware and/or environmental factors between multiple measurements (runs) can be reduced.

When the sample and the standard sample are introduced simultaneously into the thermogravimetry-mass spectrometer, a stacked-type multilayer container is preferably used. Further, the sample and the standard sample are preferably placed on separate layers of the multilayer container to prevent contact. This suppresses the occurrence of unexpected reactions and the like caused by the sample and the standard sample mixing.

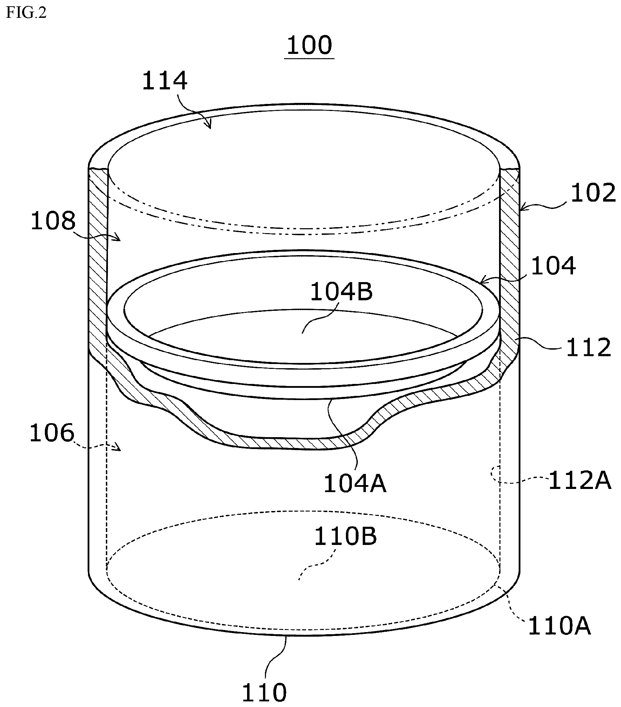

FIG. 2 is a partial cross-sectional view for explaining the configuration of an embodiment of a multilayer container. A sample container 100 includes a body 102 and a layer portion 104. The layer portion 104 divides the interior of the body 102 into two compartments, designated as a first sample chamber 106 and a second sample chamber 108.

The body 102 includes a circular base portion 110 and a cylindrical side portion 112 erected from an outer periphery 110A of the circular base portion and having an open top portion. The first sample chamber 106 is a closed space enclosed by an upper face 110B of the base portion 110, an inner face 112A of the side portion 112, and a lower face 104A of the layer portion 104. The second sample chamber 108 is a space with an open top portion 114, enclosed by a top face 104B of the layer portion 104 and the inner face 112A of the side portion 112.

The sample and the standard sample are placed in the first sample chamber 106 and the second sample chamber 108 for analysis, respectively. The sample is preferably placed in the first sample chamber 106. Also, the standard sample is preferably placed in the second sample chamber 108.

When the sample is heated from the base portion 110 side of the sample container 100, heat is more readily transferred to the first sample chamber 106. Consequently, when acquiring data on temperature versus change in mass and temperature versus mass spectrum, the recorded temperature is more likely to be closer to the true temperature of the sample.

On the other hand, since the physical properties of the standard sample are known, a discrepancy between the measured vaporization temperature and the true temperature of the standard sample at that point causes little to no hindrance in analysis.

The standard sample is a substance different from the sample. The type of the standard sample is not particularly limited as long as its physical properties are known (typically, its gasification temperature and chemical structure, etc., are known) and may be an organic compound or an inorganic compound. When the sample is a mixture, the standard sample is a substance different from any of the K types of components the mixture may contain. When the sample is a polymer, the standard sample is a substance that does not contain any of the K types of ployads the sample may contain. Note that, even when the sample is a polymer, the standard sample need not be a polymer and is preferably not a polymer.

The standard sample is preferably a substance that does not contain a reactive substituent capable of reacting with the sample. Examples of the substituent include hydroxyl groups and amino groups.

Further, the standard sample is preferably a substance having a boiling point or decomposition temperature (gasification temperature) that is lower than the gasification temperature (boiling point or decomposition temperature) of the sample. The gasification temperature of the standard sample may be selected according to the sample, and in one embodiment, 200 to 250°C is preferable. The thermogravimetry-mass spectrometer may undergo a pre-run involving heating to approximately 50 to 100°C for stabilization. When the gasification temperature of the standard sample is 200°C or higher, the standard sample is less prone to gasification during this stabilization, making the acquired first data more likely to be accurate.

Further, when the sample is a polymer or similar material, gasification may begin at around 300°C. If the gasification temperature of the standard sample is 250°C or lower, the gasification temperature does not overlap with the gasification temperature of the sample. Thus, it is easier to distinguish between a loss of mass and mass spectrum (standard sample data) of the standard sample from a loss of mass and mass spectrum of the sample.

Further, for easier handling, the standard sample is preferably a crystalline substance.

To measure the change in mass of the sample and the change in mass of the standard sample (hereinafter also referred to as "first data, etc.") by using the thermogravimetry-mass spectrometer, one method involves continuously measuring the changes in mass while varying the temperatures of the sample and standard sample (hereinafter also referred to as "sample, etc.") using a predetermined change in temperature program. The change in temperature program may be, for example, a heating program. In this case, the sample and the standard sample are heated according to the predetermined program such that their mass varies. The first data, etc. can be obtained as data representing the change in mass versus change in temperature (hereinafter also referred to as "TG data").

The first data may be the TG data itself or data obtained by applying some kind of processing to the TG data. The processing is not particularly limited and may be processing of summarizing (e.g., averaging) changes in mass over a certain temperature range, for example. This processing compresses the data, making it easier to process. In this specification, the phrase "first data including the change in mass of the sample" refers to either the TG data itself or processed data obtained by processing the TG data.

When the temperature of the sample, etc. is varied according to a predetermined change in temperature program, the change in temperature of the sample, etc. can be converted into a change in time from the start of measurement. Therefore, the first data, etc. may be acquired as data representing the change in mass of the sample, etc., over the elapsed observation time (time from the start of heating). Further, when correlating the TG data with mass spectra over time, delays may occur in detecting the mass spectrum due to factors such as the time required for generated gas to travel from the thermogravimetric measurement module to the mass spectrometry module. In such cases, the delay time may be appropriately corrected.

When the temperature varies (typically, when the sample, etc. is heated), the sample, etc. decomposes partially or completely, or evaporates, generating gas. The generated gas components are sent to a mass spectrometer connected in series. The gas components are ionized by the mass spectrometer, yielding mass spectra for the sample and the standard sample. The mass spectrum can be acquired as m/z (normally represented in italics; defined as a dimensionless quantity obtained by dividing the mass of an ion by the absolute value of the ion's charge number multiplied by the atomic mass unit) versus the change in temperature of the sample, etc. (the temperature during gasification). The mass spectrum of the sample is obtained at a predetermined number of temperatures (the number varies depending on the grouping method, e.g., 20) within a specific temperature range.

Note that the two-dimensional mass spectrum may be used as is or may be processed. The processing is not particularly limited and may be summarizing (e.g., averaging) mass spectra over a certain temperature range. A specific example of this processing is averaging two-dimensional mass spectra over a temperature range of approximately 10 to 30°C. This processing compresses the data, making analysis easier.

Further, if the first data is organized relative to the elapse of observation time, the mass spectra are also organized relative to the elapse of observation time. In either case, the first data and the second data are mutually associated by time or temperature. The above applies similarly to the change in mass and mass spectrum of the standard sample.

Specific conditions of acquisition of the mass spectrum are not particularly limited. One example method involves heating the sample, etc. at a heating rate of 50°C/min and ionizing thermal decomposition gases generated within a temperature range of 50 to 550°C by injecting helium ions at intervals of 50 shots/min. With this method, the TG data can be acquired with the horizontal axis representing mass loss and the vertical axis representing temperature, and the two-dimensional mass spectrum can be acquired with the horizontal axis representing m/z and the vertical axis representing temperature.

The two-dimensional mass spectra acquired for the plurality of samples may be converted into a data matrix X. The number of two-dimensional mass spectra used to create the data matrix X is not particularly limited as long as it is two or more, but preferably the two-dimensional mass spectra of all the samples (all samples included in the sample set) are used.

Further, when measurements are performed two or more times for a single sample, some or all of the two-dimensional mass spectra obtained from the two or more measurements may be used to create the data matrix X. The second data is preferably provided as the data matrix X.

Next, in step S2, the second data is corrected using the standard sample data. As described above, the standard sample is measured simultaneously with each sample. The standard sample data obtained at this time includes changes in mass and mass spectra correlated with each other by time or temperature.

The correction method is not particularly limited and is preferably performed based on a ratio Ws/Is of a signal intensity Ws derived from the change in mass of the standard sample to a signal intensity Is of the mass spectrum of the standard sample.

Specifically, if the signal intensity of the mass spectrum of the sample is denoted as I, a signal intensity Ic of the corrected mass spectrum of the sample is expressed by the following equation:

$$\text{Equation: } Ic = I \times (Ws/Is) \times (1/Wp)$$

This correction reduces errors not only between multiple runs but also between equipment and between laboratories, thereby improving reproducibility.

Note that step S2 may not be included in the composition estimation method. In this case, standard sample data also need not be acquired.

When the selected standard sample has a known gasification temperature and chemical structure, etc. and a temperature lower than the gasification temperature of the sample, the TG data of the standard sample can be acquired from the TG data in the lowtemperature region of the heating process (range of standard sample gasification temperature to sample gasification temperature). If the gasification temperature of the standard sample is adjusted to be lower than the gasification temperature of the sample, no special processing is required to separate the standard sample data (TG data portion) from the first data when both the standard sample and the sample are subjected to simultaneous measurement (they can be separated by temperature range).

The flowchart in FIG. 1 illustrates an embodiment where step S2 is performed after step S1. However, the correction of the second data using the standard sample data need only be performed before first NMF process (described below), and step S1 and step S2 may be performed simultaneously. That is, the acquired two-dimensional mass spectra may be corrected using the standard sample data, and the data matrix X may be created from the corrected mass spectra.

Next, in step S3, the first NMF process is performed. This processing decomposes the second data using non-negative matrix factorization (NMF) into the product of a basis spectral matrix and an intensity distribution matrix.

The second data, typically the data matrix X organized in matrix form, contains numerous data points. For example, mass spectra obtained within the same temperature range contain signals originating from multiple gas components. Thus, the mass spectra contain a large amount of information and are difficult to use directly for composition estimation. Therefore, in this step, the data matrix X is decomposed, under predetermined constraints, into a basis spectrum matrix composed of multiple basis spectra and an intensity distribution matrix representing intensity ratios of the basis spectra.

First, the data matrix X being the second data is represented as follows when the number of samples is N, the number of temperature bands is T (several grouped temperature bands), and the number of channels is D.

[Equation 1]

$$X \in \mathbb{R}_+^{NT \times D}$$

This means the data matrix X is an NT × D matrix with non-negative values.

The first NMF process takes this data matrix X as input and decomposes it into the intensity distribution matrix being a non-negative NT × M matrix (represented by the following equation);

[Equation 2]

$$\widetilde{A} \in \mathbb{R}_+^{N_T N \times M}$$

and the basis spectral matrix S being a non-negative M × D matrix (represented by the following equation).

[Equation 3]

$$S \in \mathbb{R}_+^{M \times D}$$

Here, M is defined as the number of basis fragments. Even for mass spectra of a sample that may contain 1 to K types of constituent elements, what can actually be measured is the linear sum of the spectra S of the M types of fragment gases produced when each sample is gasified.

In summary, the first NMF process is expressed by the following equation.

[Equation 4]

$$X \approx \widetilde{A}S$$

Now, the feature vector of the sample will be described in detail.

The intensity distribution matrix includes a temperature-integrated version (N rows of A) and a temperature-band-specific version (NT rows, since each sample has a spectrum with T temperature bands),

[Equation 5]

$$\widetilde{A}$$

and the feature vector for a given sample is either a single row of A, or

[Equation 6]

$$\widetilde{A}$$

a corresponding T-row submatrix.

The output from the first NMF process is

[Equation 7]

$$\widetilde{A}$$

(NT rows), which may be integrated into A (N rows) before being input to a second NMF to be described below. At this time, the feature vector of a certain sample corresponds to one row of A, and the feature vector of the endmember corresponds to one row of the "matrix B containing the feature vectors of virtual samples," which will be described below.

The procedure for factorizing a non-negative data matrix X into the product of a non-negative intensity distribution matrix A and a non-negative basis spectral matrix S (the non-negative matrix factorization procedure) is well-known. For example, see the disclosure in paragraphs [0048] to [0125] and paragraphs [0205] to [0224] of WO2022/270289, which is incorporated herein by reference.

Conceptually, the ARD-SO-NMF method proposed by Shiga et al. (Ultramicroscopy, Volume 170, November 2016, pp. 43 to 59) may be used, with the following three main modifications:

- Modification 1: Estimate the variance-covariance matrix of Gaussian noise per channel on the basis of natural isotope peaks
- Modification 2: Apply soft orthogonality constraints between basis spectra
- Modification 3: Merge basis spectra with similar intensity distributions

The specific details of the above modifications can be found in paragraphs [0208] to [0216] of WO2022/270289, and the above content is incorporated herein by reference.

The intensity distribution matrix S, which is one output of the first NMF, may be used as is in the next process or may be corrected.

The correction method is not particularly limited and preferably includes extracting noise components contained in the intensity distribution matrix by performing canonical correlation analysis (CCA) between the obtained basis spectrum matrix and the data matrix X, and then correcting the intensity distribution matrix to reduce the influence of the noise components (correction using a CCA filter).

Conceptually, the CCA filter scans sample-by-sample whether each component of the basis spectrum output from NMF was actually present in the original data. If no similar peak pattern is observed in the original data, that component is eliminated from the spectrum of that sample. The specific procedure can be found in paragraphs [0217] to [0222] of WO2022/270289, and the above content is incorporated herein by reference.

Next, in step S4, the intensity distribution matrix is corrected on the basis of the first data to acquire a second intensity distribution matrix, which serves as the mass standard for the gas components. The effects of differing ionization efficiencies for each gas component are reduced through correction based on the first data, thereby improving the accuracy of the acquired estimation results.

Here, an ionization efficiency $Z_m^{-1} > 0$ (m = 1, ..., M) is defined as the L2-normalized abundance of an m-th base spectrum contributed by an m-th fragment per unit mass. Then, the vector with an inverse ionization efficiency $Z_m$ at the m-th element

[Equation 8]

$$z \in \mathbb{R}_+^M$$

is used and a weight $w_i$ lost during the acquisition of the i-th spectrum is given by the following.

[Equation 9]

$$w_i = \widetilde{A}_{i:}\, z \,(i = 1, \ldots, N_T N)$$

$w_i$ can be read from the degree of weight reduction indicated by the TG data. The unknown $z$ is obtained by solving this system of equations. The second intensity distribution matrix of the mass standard

[Equation 10]

$$\widetilde{A}^{(w)}$$

can be converted by using Z, which has z as a diagonal matrix,

[Equation 11]

$$\widetilde{A}^{(w)} = \widetilde{A} Z$$

and the strength distribution matrix. Temperature distribution information is often unnecessary for composition analysis of the sample, and is preferably integrated along the temperature axis and converted into a distribution matrix for each sample

[Equation 12]

$$\widetilde{A}^{(w)} \in \mathbb{R}_+^{N \times M}$$

for subsequent processing (the second NMF process). On the other hand, when there is no difference in chemical composition between the endmembers and the focus is on differences in thermal stability, the temperature information may be input to the second NMF process unchanged.

[Equation 13]

$$\widetilde{A}^{(w)}$$

Next, in step S5, the second NMF process is performed. The second NMF process involves decomposing the second intensity distribution matrix using non-negative matrix factorization into the product of a matrix containing the mass fraction of a virtual sample composed solely of one constituent element within the sample and a matrix containing the feature vector of the virtual sample. This procedure is well-known and may be referenced, for example, in paragraphs [0223] to [0228] of WO2022/270289, the contents of which are incorporated herein by reference.

The outline of the processing is as follows. First, the input for the second NMF process is the second intensity distribution matrix $A^{(w)}$ obtained in step S4.

Suppose mass spectra measurements were obtained for a virtual sample composed solely of K type constituent elements, resulting in the non-negative $K \times D$ matrix "BS" (represented by the following equation) being observed.

[Equation 14]

$$BS \in \mathbb{R}_+^{K \times D}$$

Then, performing an NMF process (the second NMF process) on the second intensity distribution matrix $A^{(w)}$ as expressed by the following equation yields a matrix C containing the mass fractions of each component within the virtual sample composed solely of one type of constituent element, and a matrix B containing the feature vector of the virtual sample.

[Equation 15]

$$A^{(w)} \approx CB$$

As described above, with the second NMF process, a feature vector B of a virtual sample composed solely of one type of constituent element can be estimated. Further, K reference (pure) mass spectra composed solely of one type of constituent element can be estimated using a matrix product BS of B and an output S from the first NMF.

This method excels at composition estimation when pure samples of each component are unavailable (reference-free composition estimation). For example, when the sample is a polymer synthesized by selecting monomers from three monomer sets, the possible triad combinations are, in principle, 13 (K = 13). In this case, defining the vertices of a 12-dimensional simplex requires mass spectra of the polymer composed solely of each polyad. Many such polymers are difficult to synthesize in practice, making it inherently challenging to obtain the mass spectra of such polymers.

In this step, by performing non-negative matrix factorization on the second intensity distribution matrix, a matrix is obtained that includes the mass fraction of each virtual sample composed solely of one type of constituent element within each sample. This eliminates the need for the actual measured mass spectrum of a sample composed solely of one type of constituent element, thereby broadening the scope where composition estimation can be applied.

Further, in this step, the feature vector of the virtual sample is also obtained. The feature vector of the virtual sample is used for setting the (K-1)-simplex to be described below. The feature vector can also be used to reconstruct the mass spectrum (M spectrum) of the virtual sample, that is, the sample composed solely of one type of constituent element. This may be achieved by calculating the matrix product of the basis spectrum matrix obtained by the first NMF process and the matrix representing the feature vector of the virtual sample.

Specifically, when the first NMF process is X = AS, the second NMF process decomposes X = AS to X = AS = (CB) S and further interprets this as C(BS). Thereby, X = AS can be broken down into the matrix C representing the mass fraction of the virtual sample within the sample and the mass spectrum BS of the virtual sample. This BS corresponds to the M spectrum. Note that B is a matrix representing the feature vector of the virtual sample. Since the mass spectrum of the virtual sample can be attributed to each constituent element, identifying the mass spectrum of the virtual sample makes it possible to verify the accuracy of the estimation results. This process is described in detail in a third embodiment, where the sample is a polymer.

In step S6, a (K-1)-simplex (K minus one simplex) is set that has the minimum volume and that encompasses all the feature vectors of the virtual sample obtained in step S5 as endmembers. The algorithm for determining the vertices so that the (K-1)-simplex has the minimum volume is not particularly limited, and known algorithms can be used. Examples of such known algorithms include the minimum volume constraint-NMF method, the minimum distance constraint-NMF method, the simplex identification via split augmented Lagrangian method, and the simplex volume minimization method.

Since the second NMF process estimates the feature vector of the virtual sample, the samples need not include a sample composed solely of one type of constituent element. That is, reference data is not required. On the other hand, from the perspective of obtaining more accurate analysis results, when K is 3 or greater, it is preferable that at least one of the feature vectors of the samples be located in a region outside the hypersphere inscribed in the (K-1)-simplex (e.g., for a 2-dimensional simplex and a triangle, this is the region outside the inscribed circle but inside the triangle).

The presence of the feature vector of the reference sample in such a position means that the sample set includes samples containing a predetermined amount or more of any constituent element.

When the reference samples include at least one endmember (i.e., at least one reference sample is an endmember), the feature vectors of the other reference samples may be located within the region inside the hypersphere inscribed in the (K-1)-simplex. Even when at least one reference sample is an endmember, the other reference samples may lie on the hypersphere inscribed in the (K-1)-simplex or in the outer region. That is, in this case, the other reference samples may be at any position.

In particular, when the other reference samples contain 20 mass% or more of components belonging to endmembers that are different from the endmembers of the reference sample, the accuracy of the result estimation increases, and the accuracy increases even more when they contain 40 mass% or more.

Next, in step S7, the relative content ratios of each of the constituent elements in the sample are estimated based on the ratios of the distances between the K-endmembers and the feature vectors of the sample (obtained from the intensity distribution matrix). Specifically, the distances between the feature vectors of the target sample for estimation and each of the K-endmembers are calculated to estimate the relative content ratio of the constituent elements in the target sample. The distances are defined using the Riemannian metric distance, which accounts for the non-orthogonality of the basis spectra obtained through the first NMF process.

(Composition Estimation Method: Modification Example of First Embodiment)

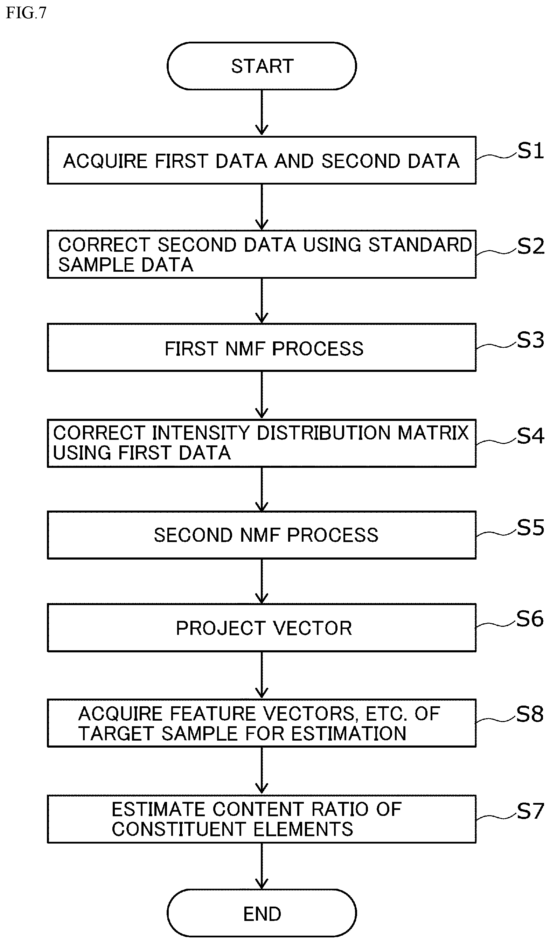

FIG. 7 is a flowchart illustrating a modification example of the first embodiment of the composition estimation method. The flowchart in FIG. 7 differs from the flowchart in FIG. 1 in that step S8 is added.

In step S8, the second data is acquired for a new sample (the target sample for estimation). The method of acquisition is as described in step S1 of the first embodiment. Note that, it is preferable that the first data and the standard sample data are also acquired at this time. The second data used for estimation may be corrected using the standard sample data described above. The type and amount of the standard sample used at this time are not particularly limited and may be the same as the type and amount of the standard sample used in step S1.

The new sample used in this step is prepared under the same constraints as the sample (reference sample) used for setting the (K-1)-simplex. That is, the constituent elements potentially present in the sample must be the same as those in the reference sample and the target sample for estimation. Further, the target sample for estimation may contain 1 to K types of constituent elements. If the target sample is prepared under the above two restrictions, the composition of the target sample can be easily estimated using this modification example.

In this modification example, since the (K-1)-simplex is set (learned) by using a predetermined number of reference samples by step S6, even if composition estimation of the target sample for estimation is performed separately (e.g., at a different time and/or in a different laboratory), it is not necessary to repeat the entire process anew, and composition estimation can be performed easily.

According to this embodiment, since learning using the reference sample set is performed first, composition estimation for the target sample can be performed later when needed. Learning up to this point can be performed using a particular laboratory and/or a particular device, while measurement of the target sample and subsequent estimation can be performed using a different laboratory and/or a different device.

(Composition Estimation Method: Second Embodiment)

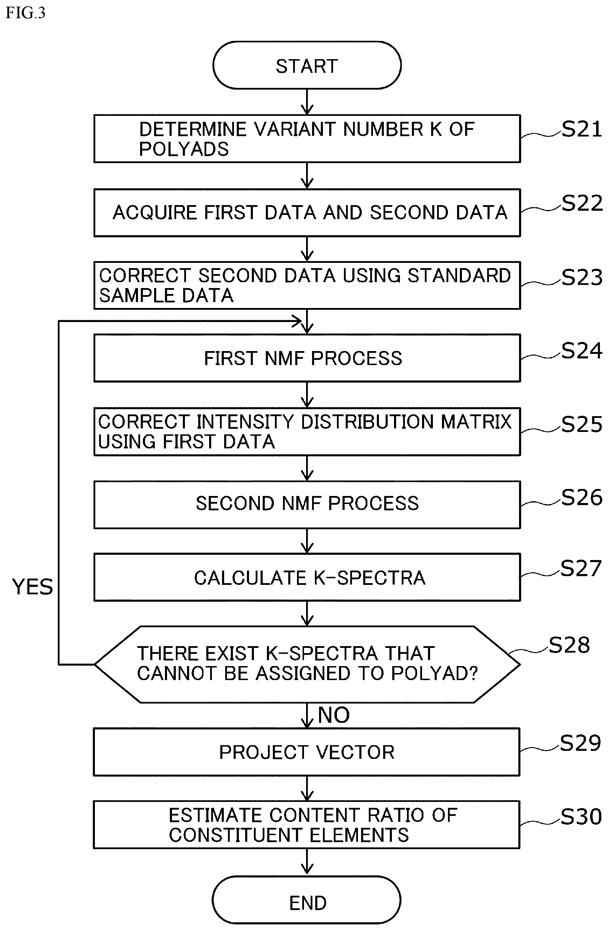

FIG. 3 is a flowchart illustrating a second embodiment of the composition estimation method. The sample in the second embodiment is a polymer composed of units derived from monomers selected from a monomer set containing a plurality of monomers. The constituent elements of the sample in the second embodiment are K types of polyads formed by combinations of the units. The polymer contains 1 to K polyads in any mass ratio.

First, in step S21, the number of variants K (where K is an integer of 2 or greater) of the polyads is determined based on the number of monomer types included in the monomer set and the number of units constituting the polyad.

The number of variants of the polyad can be uniquely determined as the number of possible combinations based on the length of the polyad and the number of types of monomers in the monomer set.

The number of monomer types is an integer of 2 or more, with no specific upper limit, but preferably 10 or less in one embodiment. For example, if the number of monomer types in the monomer set is 10, the reference sample and the target sample are synthesized from one or more of those 10 monomer types.

That is, the reference sample may be a (co)polymer obtained by adding one or more types of monomers selected from the sample set to a reaction vessel and polymerizing them under various conditions (temperature, time). The target sample may be synthesized from one or more types of monomers included in the monomer set.

The number of units constituting the polyad (polyad length) is two or more, with no particular upper limit, but preferably ten or less. More specifically, the polyad length is three or more, preferably nine or less, more preferably seven or less, and most preferably five or less.

Since the polymer sequence is estimated as the molar ratio of the polyad, the longer the polymer chain, the closer it comes to uniquely defining the entire polymer chain. On the other hand, when the polyad length is 10 or less, the increase in the number of polyad variants and the number of endmembers becomes somewhat limited when calculating combinations, and the required number of reference samples does not tend to become excessive.

When the polyad length is 3 or more, the physical properties of the polymer can be predicted more easily based on the analysis results. When the polyad length is 5 or less, the variation in reference samples tends to be smaller, making analysis easier.

The number of variants K of the polyad can be uniquely determined once the number of monomer types in the monomer set and the polyad length are fixed. For example, when the number of monomers is 3 or more and the polyad length is 3 (triad), $K = {}_jC_3 + 3{}_jC_2 + {}_jC_1$ holds. Further, when the number of monomers is 2 and the polyad length is 2, 3, 4, 5, ..., K is 3, 5, 6, 9, ....

Note that while the polyad length is uniquely determined from the theoretical number of combinations as described above, as explained below, the number of realizable combinations may be fewer than the theoretical number of combinations. Therefore, K should preferably be the theoretical number of combinations, or a number less than or equal to the theoretical number of combinations.

Next, in step S22, the first data, the second data, and the standard sample data of the sample are acquired. The method for acquiring the data is the same as step S1 in the first embodiment.

Next, in step S23, the second data is corrected by using the standard sample data. The correction method is the same as in step S2 in the first embodiment.

Next, in step S24, the first NMF process is performed. In step S25, the intensity distribution matrix is corrected by using the first data. In step S26, the second NMF process is performed. This series of steps is the same as steps S3, S4, and S5 in the first embodiment, respectively.

Next, in step S27, a K-spectrum is calculated. In step S27, the spectrum (K-spectrum) of a virtual sample composed solely of one type of polyad is reconstructed from the calculation results obtained thus far. As explained above, this is achieved by calculating for the matrix product of the matrix representing the basis spectrum obtained by the first NMF process and the matrix representing the feature vector of the virtual sample obtained by the second NMF process.

The K-spectrum calculated in this step can be considered an estimation of the mass spectrum of a sample containing only the virtual sample. In the subsequent step S6, identification is performed to determine to which polyad each component of the K-spectrum belongs.

Next, in step 28, an attempt is made to assign the K-spectrum to the polyad.

As explained above, the number of polyads is determined based on the theoretically possible number of combinations and, in principle, all K-spectra can be assigned to a polyad. However, as will be described in detail below, there may be cases where one or more K-spectra cannot be assigned to a polyad.

If any K-spectra remain unassigned to a polyad (step S28: YES), the number of variants K of polyads is changed, and steps S24 to S28 are repeated.

One possible cause for the existence of K-spectra that cannot be assigned to a polyad is that at least one variant of the polyad does not actually exist or is not sufficiently present in the reference sample.

As an example of the former case, consider triads in polymers derived from monomers A, B, and C, where A and B lack alternating copolymerizability. In this case, if the number of variants K is determined assuming the existence of "AB{AB}" as one variant of the triad, and an M-spectrum is obtained, an M-spectrum derived from (or attributable to) "AB{AB}" cannot be obtained. This is because the sample does not contain polymers possessing such a triad.

Consequently, one or more of the K-spectra cannot be attributed to a polyad.

In such a case, correction can be made by reducing K by 1 and then performing steps S24 to S27 again.

That is, if K-spectra that cannot be assigned to a polyad exist, mechanically reducing K by 1 and recalculating the K-spectrum yields more accurate analysis results, even if the fact that A and B lack alternating copolymerizability is unknown.

As described above, when the composition estimation method includes steps S27 and S28, even if a variant of a polyad that cannot exist is incorporated into K due to the combination of individual monomers, etc. and the cause is unknown, it is possible to evaluate the validity of the analysis and make corrections simply by confirming whether the K-spectrum can be assigned to the set polyad.

Further, even if the polyad "AB" actually exists, if the sample (typically, the reference sample) does not contain that polyad in a sufficient amount, a situation similar to the above may occur. In this case, it is also possible to correct the analysis by adding more samples and repeating steps S22 to S28. Note that, even in this case, steps S24 to S27 may be performed by reducing K by 1 while leaving the reference sample unchanged.

On the other hand, when a K-spectrum is assigned to each of the polyads (step S28: NO), the next step (S29), vector projection, is performed.

Step S29 and the subsequent estimation of the content ratio of the constituent elements (step S30) are the same as steps S6 and S7 in the first embodiment.

The polymers to which the composition estimation method of the second embodiment can be applied are not particularly limited and may be either synthetic polymers or natural polymers. For example, the composition estimation method can also be applied to (co)polymers synthesized based on monomers having ethylene-unsaturated bonds. The polymerization method of the polymers is also not particularly limited. The polymers may be synthesized by any method such as addition polymerization, ringopening polymerization, condensation polymerization, addition-condensation polymerization, or addition polymerization. Further, the reference sample and the target sample for estimation may be

# EP 4 760 252 A1

synthesized from the same monomer set, even if their synthesis methods (polymerization methods) differ.

For example, the reference sample may be a sample prepared by conventional radical polymerization under variously altered polymerization conditions, while the target sample for estimation may be precisely controlled and polymerized by another method (e.g., living polymerization such as atom transfer radical polymerization or reversible addition-fragmentation chain transfer (RAFT) polymerization).

One application example of the composition estimation method is to sequence analysis of a (photo)resist resin. A correlation is known to exist between the developability of resist resins and their polyad sequences. By performing sequence analysis on resist resins, it becomes easier to develop resist resins with superior developability and investigate causes of resist development defects.

The applicable resist resins are not particularly limited. Examples of the resist resins include resins synthesized from the following monomers.

3-Hydroxy-1-adamantyl methacrylate, 1-adamantyl acrylate, 1-adamantyl methacrylate, 2-methyl-2-adamantyl methacrylate, 2-methyladamantane-2-yl acrylate, 2-ethyl-2-adamantyl methacrylate, 2-ethyl-2-adamantane acrylate, dicyclopentanyl acrylate, 2-isopropyladamantane-2-yl acrylate, tetrahydro-dicyclopentadienyl methacrylate, 5-methacryloyloxy-2,6-norbornanecarbolactone, β-hydroxy-γ-butyrolactone methacrylate, 1-ethylcyclopentyl methacrylate, α-methacryloxy-γ-butyrolactone, 1-ethylcyclohexyl methacrylate, 1-methylcyclopentyl methacrylate, 4-acetoxystyrene, 2-oxo-2-(2,2,3,3,3-pentafluoropropoxy)ethyl methacrylate, 3-hydroxy-1-adamantyl acrylate, (adamantanel-yl oxy)methyl methacrylate, 2-isopropyl-2-adamantyl methacrylate, 1,3-adamantane diol diacrylate, 1,3-adamantane diol dimethacrylate, 1-methyl-1-ethyl-1-adamantyl methanol methacrylate, 1,1-diethyl-1-adamantyl methanol methacrylate, 5,7-dimethyl-1,3-adamantane diol diacrylate, 5,7-dimethyl-1,3-adamantane diol dimethacrylate, 5-ethyl-1,3-diadamantane diol diacrylate, 5-ethyl-1,3-diadamantane diol dimethacrylate, 2-methyl-2-propenoic acid 2-oxo-2-[(5-oxo-4-oxatricyclo [4.3.1.13,8]undec-2-yl)oxy]ethyl ester, 2-propenoic acid, 2-methyl-, 2-[(hexahydro-2-oxo-3,5-methano-2H-cyclopenta[b] furan-6-yl)oxy]-2-oxoethyl ester, 2-(2,2-difluoroethenyl)bicyclo[2.2.1]heptane, 6-methacryloyl-6-azabicyclo[3.2.0]heptan-7-one, 2-propenoic acid, (3R,3aS,6R,7R,8aS)-octahydro-3,6,8,8-tetramethyl-1H-3a, 7-methanazulen-6-ol ester, 2-propenoic acid, (3R,3aS,6R,7R,8aS)-octahydro-3,6,8,8-tetramethyl-1H-3a,7-methanazulen-6-yl ester, 2-cyclohexylpropane-2-yl methacrylate, 1-isopropylcyclohexyl methacrylate, 1-methylcyclohexyl methacrylate, 1-ethylcyclopentyl acrylate, 1-methylcyclohexyl acrylate, tetrahydropyranyl methacrylate, tetrahydro-2-furanyl methacrylate, (3-methyl-5-oxooxolan-3-yl)-2-methylprop-2-enoate, 2-oxotetrahydrofuran-3-yl acrylate, (5-oxotetrahydrofuran-2-yl) methyl methacrylate, (2-oxo-1,3-dioxolan-4-yl) methyl methacrylate, 1-ethoxyethyl methacrylate, N-(methoxymethyl) methacrylamide, N-isopropyl methacrylamide, ethyl 2-(bromomethyl)acrylate, methyl 2-(bromomethyl)acrylate, N-butyl 2-(bromobutyl) acrylate, 2,2,3,3,4,4,4-heptafluorobutyl methacrylate, 2,5-dimethylhexane-2,5-diyl bis(2-methyl methacrylate), 2-(trifluoromethanesulfonamido)ethyl methacrylate, 3-[dimethoxy(methyl)silyl]propyl acrylate, 2,3-dihydroxypropyl acrylate, 9H-fluorene-9,9-dimethanol dimethacrylate, 9,9-bis[(acryloyloxy)methyl]fluorene, 9-anthryl methyl methacrylate, 4-hydroxyphenyl methacrylate, 4-(4-acryloyloxybutoxy)benzoic acid, 3-(4-hydroxyphenoxy)propyl acrylate, 10-[(1,1'-biphenyl)-2-yloxy]decyl acrylate, 2-vinylnaphthalene, 4-tert-butoxystyrene, 4-isopropenylphenol, 4-[(1-ethoxyethoxy)styrene, 3,4-diacetoxystyrene, 4-allyloxy styrene, 3-tert-butoxy styrene, 2-acetoxy styrene, 4-ethenyl-1,2-bis(1-ethoxyethoxy) benzene, tetrahydro-2-[4-(1-methylethenyl)phenoxy]furan, 2-[(4-vinylphenoxy)methyl]oxirane, 3,5-diacetoxystyrene, 2,3-difluoro-4-vinylphenol, 3-fluoro-4-vinylphenol, 1,1,2,2-tetramethylpropyl acrylate, 1-ethenyl-4-propan-2-yloxybenzene, 4-vinylphenylbenzoate, 1-ethylhexyl methacrylate, 2-isopropyl-2-adamantyl methacrylate, 3-hydroxy-1-adamantyl methacrylate, 1,1-dimethylpentyl methacrylate, 1,1-dimethylhexyl methacrylate, neopentyl methacrylate, and 2,2,2-trifluoroethyl methacrylate.

Specific monomer combinations include, for example, γ-butyrolactone (meth)acrylate/(meth)acrylic acid 2-methyl-2-adamantyl/3-hydroxy-1-adamantyl (meth)acrylate, and 4-hydroxystyrene/2-methyl-2-adamantyl (meth)acrylate/styrene.

(Composition Estimation Device)

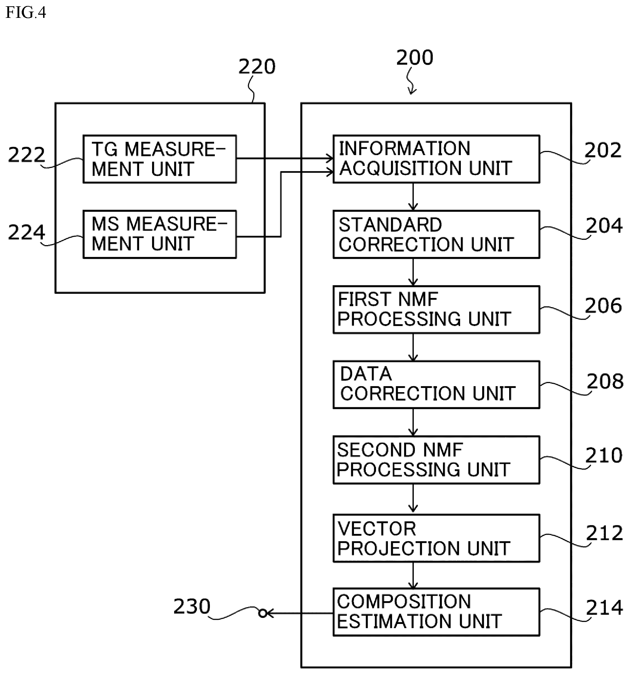

FIG. 4 is a functional block diagram illustrating an embodiment of a composition estimation device. A composition estimation device 200 includes an information acquisition unit 202, a standard correction unit 204, a first NMF processing unit 206, a data correction unit 208, a second NMF processing unit 210, a vector projection unit 212, and a composition estimation unit 214. The composition estimation device 200 may be a computer consisting of hardware such as a processor and a memory. Each unit of the composition estimation device 200 is a function realized by the processor executing a program loaded into the memory.

The information acquisition unit 202 acquires TG data (temperature or time versus change in mass) measured by a TG measurement unit 222 of a thermogravimetry-mass spectrometer 220 connected to the composition estimation device 200, and MS data (temperature or time versus mass spectrum) acquired by an MS measurement unit 224. In the example of FIG. 4, the composition estimation device 200 and the thermogravimetry-mass spectrometer 220 are connected directly or via a communication network, either by wired or wireless means. The information acquisition unit 202 directly acquires the measurement results from the thermogravimetry-mass spectrometer 220. Note that, the composition estimation device 200 need not be connected to the thermogravimetry-mass spectrometer 220. In such a case, the TG data and the MS data may be acquired via a storage medium or via a communication network. The composition estimation device 200 may also serve as a controller for the thermogravimetry-mass spectrometer 220.

The hardware and measurement method of the thermogravimetry-mass spectrometer 220 are the same as those described in step S1 of the first embodiment of the composition estimation method. The information acquisition unit 202 acquires the first data and the second data on the basis of the TG data and the MS data of the sample, etc.

The standard correction unit 204 corrects the second data on the basis of the data of standard samples measured under the same conditions as the sample (typically measured simultaneously). The standard data and the correction method are the same as those in the method described in step S2 of the first embodiment of the composition estimation method.

The first NMF processing unit 206 decomposes the second data into the product of a basis spectrum matrix and an intensity distribution matrix using non-negative matrix factorization. The specific method used by the first NMF processing unit 206 is the same as that described in step S3 of the first embodiment of the composition estimation method.

The data correction unit 208 corrects the effect of differences in ionization efficiency of gas components reflected in the intensity distribution matrix on the basis of the first data, thereby obtaining a second intensity distribution matrix standardized to the mass of the gas components. The specific method used by the data correction unit 208 is the same as that described in step S4 of the first embodiment of the composition estimation method.

The second NMF processing unit 210 performs a second NMF process on the second intensity distribution matrix. This involves decomposing the second intensity distribution matrix using non-negative matrix factorization into the product of a matrix representing the mass fraction of a virtual sample composed of only one type of constituent element and a matrix representing the feature vector of the virtual sample. The specific method of the second NMF process is the same as the method described in step S5 of the first embodiment of the composition estimation method.

The vector projection unit 212 sets a (K-1)-simplex that encompasses all feature vectors of the plurality of samples, using the feature vectors of the virtual sample as the endmembers. The method for setting the (K-1)-simplex is the same as the method described in step S6 of the first embodiment of the composition estimation method.

The composition estimation unit 214 estimates the content ratios of each of the constituent elements in the sample from the ratio of the distances between the K endmembers and the feature vectors of the samples. The method of the estimation is the same as that described in step S7 of the first embodiment of the composition estimation method.

According to the composition estimation device 200, the composition estimation method is performed by the functions of each unit. The result obtained by the composition estimation device 200 (composition estimation result) is output to an external device 230. This result can be used, for example, to search for polymerization conditions as a result of sequence analysis when the sample is a polymer.

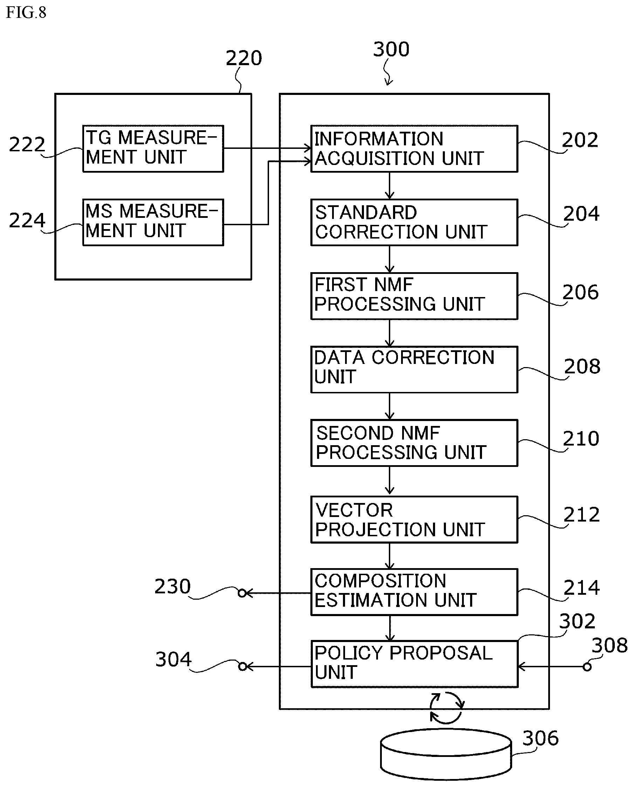

FIG. 8 is a configuration diagram illustrating a policy proposal device 300. In addition to the composition estimation device 200, the policy proposal device 300 includes a policy proposal unit 302 configured to output a new sample preparation (synthesis, mixing, etc.) policy to an external device 304 on the basis of the estimation results obtained by the composition estimation unit 214.

The policy proposal unit 302 receives information about the target sample, such as the target polyamide sequence and composition information, from an external source 308. Then, the policy proposal unit 302 applies this information to a model pre-trained via machine learning using a training dataset 306 containing polymerization or blending conditions and the resulting sample compositions, and proposes a policy for obtaining the target sequence.

According to the policy proposal device 300, a preparation policy for a new sample is proposed based on the composition estimation result, thereby eliminating the need for manual analysis of the composition estimation result.

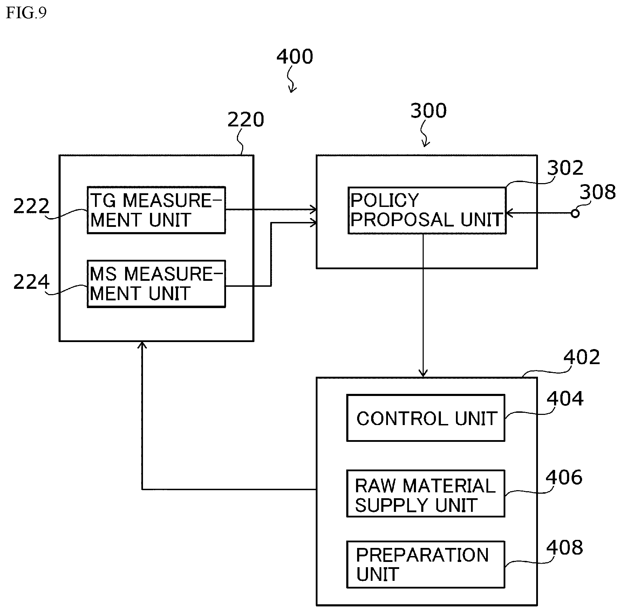

FIG. 9 is a configuration diagram of an automatic preparation device 400. The automatic preparation device 400 includes the thermogravimetry-mass spectrometer 220, the policy proposal device 300, and a sample preparation device 402.

The sample preparation device 402 includes a control unit 404, a raw material supply unit 406, and a preparation unit 408. The control unit 404 is a computer consisting of hardware such as a processor and memory. The control unit 404 controls the various units of the sample preparation device 402.

The raw material supply unit 406 supplies raw materials used for preparing the sample to the preparation unit 408. For example, if the sample to be prepared is a polymer, the raw material supply unit 406 supplies monomers to the preparation unit 408. Alternatively, if the sample is a mixture, the raw material supply unit 406 supplies each component of the mixture to the preparation unit 408.

The preparation unit 408 prepares the sample using the raw materials supplied from the raw material supply unit 406. If the sample is a polymer, the preparation unit 408 includes a reaction vessel, for example. If the sample is a mixture, the preparation unit 408 includes a mixing vessel, for example.

The control unit 404 controls the raw material supply unit 406 and the preparation unit 408 according to the policy output by the policy proposal unit 302, which received information about the target sample from the external source 308. As a result, the sample is prepared according to the policy.

The prepared sample is sent to the thermogravimetry-mass spectrometer 220 for compositional analysis. The automatic preparation device 400 automatically performs a cycle of sample analysis, policy proposal, sample preparation according to the policy, and analysis of the prepared sample.

(Experimental Results)

The following describes the results of experiments using the composition estimation method.

TG-TOFMS (Time-of-Flight Mass Spectrometry) measurements were performed using a system connecting a TG-DTA8122 thermogravimetric analysis module (Rigaku) and a JMS-T2000GC AccuTOF mass spectrometry module (JEOL) via an electron impact (EI) ion source.

Polymethyl methacrylate (hereinafter referred to as "M"; Shodex), polystyrene (hereinafter referred to as "S"; Shodex), and polyethyl methacrylate (hereinafter referred to as "E"; Sigma-Aldrich) were selected as two or three components, mixed in 4,4'-dioxane (3.3 mass %), drop-cast onto aluminum pans, and used as samples.

The solvent was evaporated under vacuum and then loaded into the combustion chamber of the TG and pyrolyzed at temperatures from 50 to 600°C with a heating rate of 25°C/min. Pyrolysis gas was conveyed through a transfer tube maintained at 350°C to the ion source of the TOFMS. The MS delay time and spectral intensity were calibrated using 4,4'-di-tert-butylbiphenyl (hereinafter "dtBbph"; Sigma-Aldrich) as the standard sample. The acquisition interval for mass spectra and mass loss was set to 1 second. Profile spectra were converted to centroid spectra with a tolerance of $\pm 5$ mDa using msaXcel (JEOL). RQMS analysis was performed using the exact same algorithm described in References 1 to 3 below, except that spectral fragment abundances (FAs) were converted to weight fragment abundances (Faw) using the TG curve.

Reference 1: Chemical Science, 2023, 14, 5619-5626
Reference 2: Ultramicroscopy, 2016, 170, 43-59
Reference 3: IEEE Transactions on Signal Processing 2016, 64(23), 6254-6268.

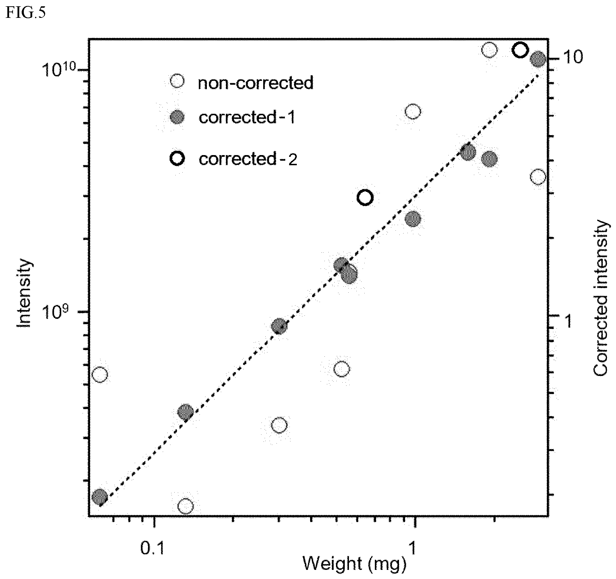

First, the MS signal intensity was corrected using the standard sample data to ensure linear variation for the minimum sample quantity required for quantitative analysis. FIG. 5 is a graph showing the effect of MS intensity correction using a standard sample. The horizontal axis represents the mass (mg) of polystyrene (S), and the vertical axis represents the MS intensity.

The thin unshaded circles (white circles) represent raw data (non-corrected).

The shaded circles (gray circles) represent the corrected intensity (corrected-1).

The thick unshaded circles (white circles) represent intensities measured in another laboratory using different equipment (TGMS device equipped with a quadrupole mass spectrometry module) and subsequently corrected (corrected-2).

The dashed line is the best-fit line.

As shown in FIG. 5, compared to the linearity of the non-corrected MS intensity versus the sample mass of PS, the corrected data ($Ic = I \times (Ws/Is)$) obtained by multiplying the factor Ws/Is (where Ws is the mass of the standard sample, and Is is the MS intensity of the standard sample) exhibited significantly improved linearity.

Further, the corrected data (corrected-2) measured in another laboratory using different equipment also plotted near the best-fit line, demonstrating the high reproducibility of this method.

Note that there is a slight timing difference (delay) between the signal obtained from TG and the signal obtained from MS. In this experiment, the delay was corrected using the differential of the TG curve (dTG) and the standard peak top of the TIC (Total Ion Chromatogram) curve, ensuring perfect alignment.

Next, composition estimation of the ternary mixture was performed.

After the MS signal intensity was corrected using the standard sample data, the MS spectra acquired at 300 to 600°C (10 to 22 mins), corresponding to sample decomposition, were extracted and divided into $N_T$ temperature ranges (typically $N_T = 10$) and integrated. The resulting spectral dataset, consisting of $N_T \times N$ spectra (N: number of samples) was subjected to (TG-)RQMS analysis, and the estimated virtual samples and their mass fractions within each sample were output.

A total of 32 samples and reference samples were used (the two were not distinguished) and each contained two or three types of components selected from polymethyl methacrylate (M), polystyrene (S), and polyethyl methacrylate (E). Further, no sample contained a single component exceeding 80 mass%. That is, none of the samples contained only one type of constituent element (component).

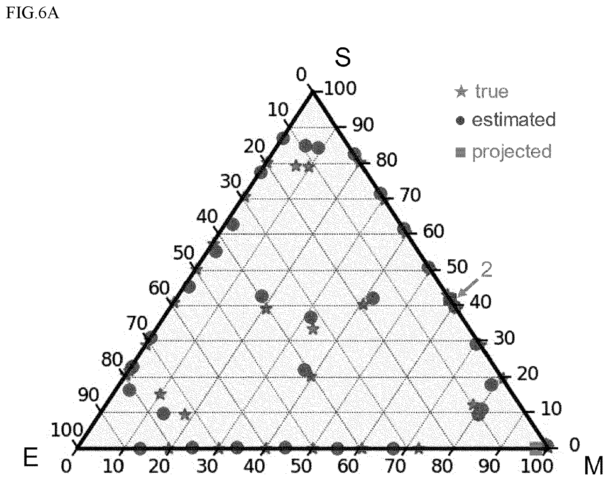

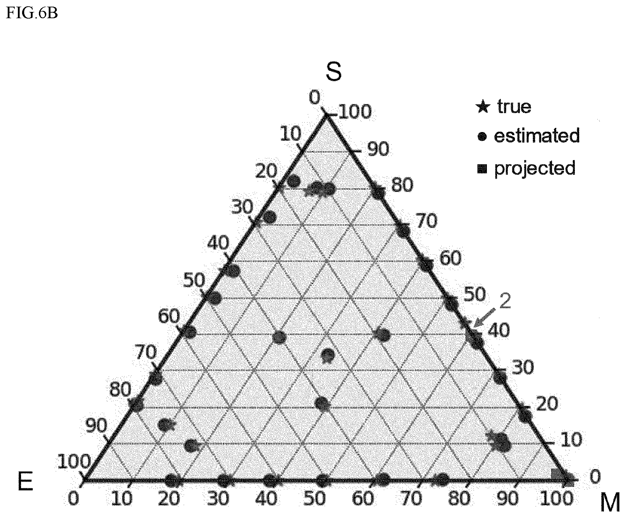

FIGS. 6A and 6B show the results of composition estimation. FIG. 6A shows the composition estimation results when the second data was not corrected using TG data (comparative example), and FIG. 6B shows the composition estimation results when the second data was corrected using TG data (example).

In each figure, star shapes represent the true mass fractions of each sample, while closed circles represent the composition estimation results. Additionally, square shapes represent test data projected onto individual simplexes (in this case, triads) obtained from the measurement results of each sample. That is, the square shapes represent the results of composition estimation performed by using simplexes defined (learned) as reference samples from the 32 samples described above. Note that the test data was measured in a different laboratory using different equipment (similar to the corrected-2 data described above).

The results in FIG. 6A show a noticeable discrepancy between the true values and the estimation results, particularly near the center of the simplexes (triads). In contrast, the results in FIG. 6B show that the true values and the estimation results were closer across all of the simplexes. The root mean square error (RMSE) of the estimated fractions decreased from 0.4 to 0.1 simply by incorporating TG.

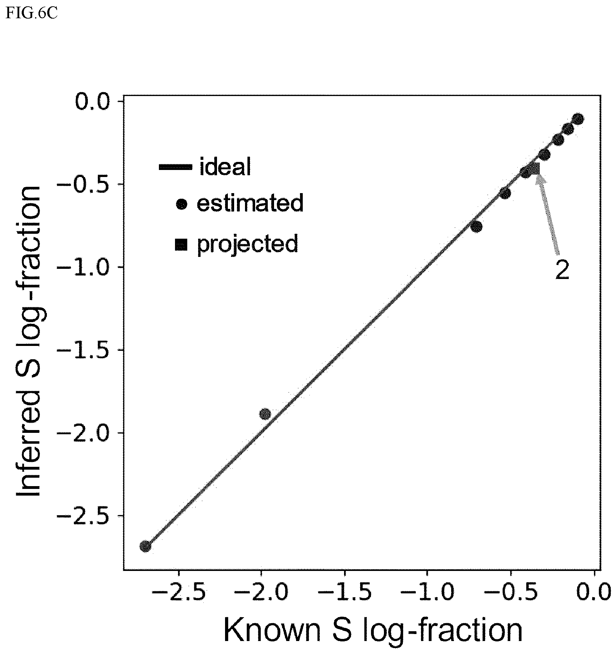

FIG. 6C is a log-scale plot taken along the M-S edge in FIG. 6B. The vertical axis represents the estimated S-fraction (log-scale), and the horizontal axis represents the measured S-fraction. The estimated spectra (vertex spectra, endmembers) of the virtual samples are indicated as estimated markers (circles), while "ideal" represents the ideal line. The square shapes indicate test data measured by another laboratory using different equipment.

Both the estimation results and the test data are distributed along the ideal line, demonstrating that composition estimation was performed with high precision.

As clearly indicated by the absence of markers at the vertices of each triad (derived from samples consisting solely of S, M, and E), this method is reference-free.

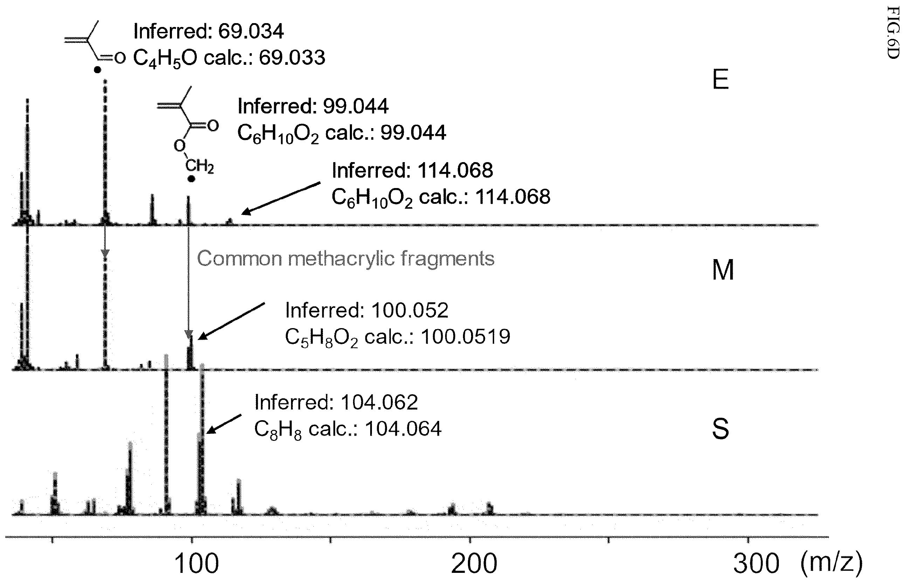

Next, mass spectra of samples containing only one type of component (E, M, or S) were predicted from the feature vectors corresponding to the vertex of each simplex defined (learned) in FIG. 6B, and compared with the measured data. FIG. 6D shows the results. The dashed line represents the measured mass spectrum, while the estimation results are shown as a gray band. The peaks for all fragment ions were nearly identical between the measured values and the estimated values. This result also demonstrates that the composition estimation was performed accurately. Note that, the measured spectrum represented as a dashed line in FIG. 6D was not used for the composition estimation.

As demonstrated by the above verification results, the composition estimation method disclosed herein exhibited excellent accuracy and/or excellent reproducibility. Specifically, the composition estimation method disclosed herein enabled accurate composition estimation within an error of $\pm 1$ mass%, which has been difficult with conventional RQMS, and/or quantification of contaminants in the 1000 ppm order with an error of $\pm 20\%$.

This effect was achieved through a minor update of converting spectral fragment abundances to mass fragment abundances using synchronized TG data. While the procedural change compared to conventional RQMS methods is minor, its effect is significant. Further, this update is an original perspective and has not been considered before.

Reference Signs List

100 Sample container
102 Body
104 Layer portion
106 First sample chamber
108 Second sample chamber
110 Base portion
112 Side portion
114 Top portion
200 Composition estimation device
202 Information acquisition unit
204 Standard correction unit
206 First NMF processing unit
208 Data correction unit
210 Second NMF processing unit
212 Vector projection unit
214 Composition estimation unit
220 Thermogravimetry-mass spectrometer
222 TG measurement unit
224 MS measurement unit
300 Policy proposal device
302 Policy proposal unit
306 Learning dataset

400 Automatic preparation device
402 Sample preparation device
404 Control unit
406 Raw material supply unit
408 Preparation unit
408 Adjustment unit

**Claims**

1. A composition estimation method for estimating a content ratio of one or more and K or less types of constituent elements in a sample, K being an integer of two or more, the method comprising:

   for each of a plurality of the samples, measuring at least a change in mass of the sample while varying a temperature of the sample, sequentially ionizing resulting gas components, and acquiring first data and second data correlated with each other by time or temperature, the first data including the change in mass of the sample, and the second data including a mass spectrum of each of the gas components in the sample;
   performing a first NMF process of decomposing the second data into the product of a basis spectrum matrix and an intensity distribution matrix using non-negative matrix factorization;
   correcting, on the basis of the first data, an effect of differences in ionization efficiency for each of the gas components reflected in the intensity distribution matrix to obtain a second intensity distribution matrix serving as a mass standard;
   performing a second NMF process of decomposing the second intensity distribution matrix using non-negative matrix factorization into the product of a matrix containing mass fractions of a virtual sample, in each sample, composed solely of one type of constituent element and a matrix including feature vectors of the virtual sample;
   setting a (K-1)-simplex that encompasses all the feature vectors and that has the feature vectors as endmembers; and
   estimating the respective content ratios of the constituent elements in the sample from a ratio of distances between the K-number of endmembers and the feature vectors of the sample.

2. The composition estimation method according to claim 1, further comprising:
   before performing the first NMF process, measuring at least a change in mass of a standard sample while varying a temperature of the standard sample, sequentially ionizing resulting gas components, and acquiring standard sample data including the change in mass of the standard sample and a mass spectrum of the standard sample, correlated with each other by time or temperature, and correcting the second data on the basis of the standard sample data.

3. The composition estimation method according to claim 2, wherein the correcting is performed using a ratio Ws/Is of a signal intensity Ws derived from the change in mass of the standard sample to a signal intensity Is of the mass spectrum of the standard sample.

4. A composition estimation method for estimating a content ratio of one or more and K or less types of constituent elements in a sample, K being an integer of two or more, the method comprising:

   for each of a plurality of the samples, measuring at least a change in mass of the sample and a standard sample while varying temperatures of the sample and the standard sample, sequentially ionizing resulting gas components, and acquiring first data and second data correlated with each other by time or temperature, the first data including the change in mass of the sample, and the second data including a mass spectrum of each of the gas components in the sample;
   acquiring standard sample data including the change in mass of the standard sample and a mass spectrum of the standard sample, correlated with each other by time or temperature; and
   estimating the content ratio of the constituent elements in the sample by correcting the second data on the basis of the standard sample data and using the first data and the second data after correction.

5. The composition estimation method according to claim 4, wherein the estimating the content ratio includes:

   performing a first NMF process of decomposing the second data after correction into the product of a basis spectrum matrix and an intensity distribution matrix using non-negative matrix factorization;
   performing a second NMF process of decomposing the intensity distribution matrix using non-negative matrix factorization into the product of a matrix representing mass fractions of a virtual sample, in each sample, composed solely of one type of constituent element and a matrix representing feature vectors of the virtual sample;

setting a (K-1)-simplex that encompasses all the feature vectors and that has the feature vectors as endmembers; and

estimating the respective content ratios of the constituent elements in the sample from a ratio of distances between the K-number of endmembers and the feature vectors of the sample.

6. The composition estimation method according to any one of claims 2 to 5, wherein the standard sample is a substance with a boiling point or a decomposition temperature lower than a gasification temperature of the sample.

7. The composition estimation method according to any one of claims 2 to 6, wherein the change in mass of the sample and the change in mass of the standard sample are measured by placing the sample and the standard sample in a container not in direct contact with each other and while varying the temperature of the sample and the standard sample simultaneously.

8. The composition estimation method according to claim 7, wherein

the container is a stacked multi-layer container, and
the sample and the standard sample are placed on different layers of the multilayer container.

9. The composition estimation method according to any one of claims 1 to 8, wherein the sample is a mixture composed of the constituent elements.

10. A composition estimate device configured to estimate a content ratio of one or more and K or less types of constituent elements in a sample, K being an integer of two or more, the device comprising:

an information acquisition unit configured to measure, for each of a plurality of the samples, at least a change in mass of the sample while varying a temperature of the sample, sequentially ionizing resulting gas components, and acquiring first data and second data correlated with each other by time or temperature, the first data including the change in mass of the sample, and the second data including a mass spectrum of each of the gas components in the sample;

a first NMF processing unit configured to perform a first NMF process of decomposing the second data into the product of a basis spectrum matrix and an intensity distribution matrix using non-negative matrix factorization;

a data correction unit configured to correct, on the basis of the first data, an effect of differences in ionization efficiency for each of the gas components reflected in the intensity distribution matrix to obtain a second intensity distribution matrix serving as a mass standard;

a second NMF processing unit configured to perform a second NMF process of decomposing the second intensity distribution matrix using non-negative matrix factorization into the product of a matrix representing mass fractions of a virtual sample, in each sample, composed solely of one type of constituent element and a matrix representing feature vectors of the virtual sample;

a vector projection unit configured to set a (K-1)-simplex that encompasses all the feature vectors and that has the feature vectors as endmembers; and

a composition estimation unit configured to estimate the respective content ratios of the constituent elements in the sample from a ratio of distances between the K-number of endmembers and the feature vectors of the sample.

11. The composition estimate device according to claim 10, further comprising:
a standard correction unit configured to, before the first NMF process is performed, measure at least a change in mass of a standard sample while varying a temperature of the standard sample under the same conditions as those for the plurality of samples, sequentially ionize resulting gas components, and correct the second data on the basis of standard sample data including the change in mass of the standard sample and a mass spectrum of the standard sample, correlated with each other by time or temperature.

12. A program executed by a computer to function as the composition estimate device described in claim 10 or 11.

13. A sample container to be used in a thermogravimetry-mass spectrometry method of measuring at least a change in mass of a sample by varying a temperature of the sample and ionizing resulting gas components for mass spectrometry analysis, the sample container comprising:

a body including a circular base portion, and a cylindrical side portion erected from an outer periphery of the base portion and having an open top portion;

a layer portion being a disc-like plate member substantially concentric with the side portion, the plate member being disposed so as to close an open portion of the side portion at a midpoint along the height of the side portion, and having a downwardly concave portion formed at its center;

a first sample chamber defined by an upper face of the base portion, an inner face of the side portion, and a lower face of the layer portion; and

a second sample chamber defined by an upper face of the layer portion and an inner face of the side portion.

14. A thermogravimetry-mass spectrometry method of measuring at least a change in mass of a sample by varying a temperature of the sample and ionizing resulting gas components for mass spectrometry analysis, the method comprising:

placing a standard sample in one of the first sample chamber and the second sample chamber of the sample container described in claim 13;

placing a sample in the other of the first sample chamber and the second sample chamber; and

performing measurement by varying a temperature of the standard sample and a temperature of the sample in the first sample chamber and the second sample chamber.

FIG.1

```
                    ┌─────────────┐
                    │    START    │
                    └──────┬──────┘
                           ↓
        ┌──────────────────────────────────────┐
        │ ACQUIRE FIRST DATA AND SECOND DATA    │──── S1
        └──────────────────┬───────────────────┘
                           ↓
        ┌──────────────────────────────────────┐
        │ CORRECT SECOND DATA USING STANDARD    │──── S2
        │ SAMPLE DATA                           │
        └──────────────────┬───────────────────┘
                           ↓
        ┌──────────────────────────────────────┐
        │         FIRST NMF PROCESS             │──── S3
        └──────────────────┬───────────────────┘
                           ↓
        ┌──────────────────────────────────────┐
        │ CORRECT INTENSITY DISTRIBUTION MATRIX │──── S4
        │ USING FIRST DATA                      │
        └──────────────────┬───────────────────┘
                           ↓
        ┌──────────────────────────────────────┐
        │        SECOND NMF PROCESS             │──── S5
        └──────────────────┬───────────────────┘
                           ↓
        ┌──────────────────────────────────────┐
        │          PROJECT VECTOR               │──── S6
        └──────────────────┬───────────────────┘
                           ↓
        ┌──────────────────────────────────────┐
        │ ESTIMATE CONTENT RATIO OF             │──── S7
        │ CONSTITUENT ELEMENTS                  │
        └──────────────────┬───────────────────┘
                           ↓
                    ┌─────────────┐
                    │     END     │
                    └─────────────┘
```

FIG.2

FIG.3

```
                    ┌─────────────┐
                    │    START    │
                    └──────┬──────┘
                           ↓
        ┌──────────────────────────────────────┐
        │ DETERMINE VARIANT NUMBER K OF         │~ S21
        │ POLYADS                               │
        └──────────────────┬───────────────────┘
                           ↓
        ┌──────────────────────────────────────┐
        │ ACQUIRE FIRST DATA AND SECOND DATA    │~ S22
        └──────────────────┬───────────────────┘
                           ↓
        ┌──────────────────────────────────────┐
        │ CORRECT SECOND DATA USING STANDARD    │~ S23
        │ SAMPLE DATA                           │
        └──────────────────┬───────────────────┘
                           ↓
        ┌──────────────────────────────────────┐
        │ FIRST NMF PROCESS                     │~ S24
        └──────────────────┬───────────────────┘
                           ↓
        ┌──────────────────────────────────────┐
        │ CORRECT INTENSITY DISTRIBUTION MATRIX │~ S25
        │ USING FIRST DATA                      │
        └──────────────────┬───────────────────┘
                           ↓
        ┌──────────────────────────────────────┐
        │ SECOND NMF PROCESS                    │~ S26
        └──────────────────┬───────────────────┘
                           ↓
        ┌──────────────────────────────────────┐
        │ CALCULATE K-SPECTRA                   │~ S27
        └──────────────────┬───────────────────┘
                           ↓
  YES   ╱────────────────────────────────────────╲
 ◄──────   THERE EXIST K-SPECTRA THAT              ~ S28
        ╲  CANNOT BE ASSIGNED TO POLYAD?          ╱
          ╲────────────────────────────────────╱
                           ↓ NO
        ┌──────────────────────────────────────┐
        │ PROJECT VECTOR                        │~ S29
        └──────────────────┬───────────────────┘
                           ↓
        ┌──────────────────────────────────────┐
        │ ESTIMATE CONTENT RATIO OF             │~ S30
        │ CONSTITUENT ELEMENTS                  │
        └──────────────────┬───────────────────┘
                           ↓
                    ┌─────────────┐
                    │     END     │
                    └─────────────┘
```

FIG.4

FIG.5

FIG.6A

FIG.6B

FIG.6C

FIG.6D

EP 4 760 252 A1

Inferred: 69.034
$C_4H_5O$ calc.: 69.033

E

Inferred: 99.044
$C_6H_{10}O_2$ calc.: 99.044

Inferred: 114.068
$C_6H_{10}O_2$ calc.: 114.068

Common methacrylic fragments

M

Inferred: 100.052
$C_5H_8O_2$ calc.: 100.0519

Inferred: 104.062
$C_8H_8$ calc.: 104.064

S

100          200          300   (m/z)

FIG.7

```
                    ┌─────────────┐
                    │    START    │
                    └──────┬──────┘
                           │
                           ▼
        ┌──────────────────────────────────────┐
        │ ACQUIRE FIRST DATA AND SECOND DATA    │ ⟋S1
        └──────────────────┬───────────────────┘
                           │
                           ▼
        ┌──────────────────────────────────────┐
        │ CORRECT SECOND DATA USING STANDARD    │ ⟋S2
        │ SAMPLE DATA                           │
        └──────────────────┬───────────────────┘
                           │
                           ▼
        ┌──────────────────────────────────────┐
        │          FIRST NMF PROCESS            │ ⟋S3
        └──────────────────┬───────────────────┘
                           │
                           ▼
        ┌──────────────────────────────────────┐
        │ CORRECT INTENSITY DISTRIBUTION MATRIX │ ⟋S4
        │ USING FIRST DATA                      │
        └──────────────────┬───────────────────┘
                           │
                           ▼
        ┌──────────────────────────────────────┐
        │         SECOND NMF PROCESS            │ ⟋S5
        └──────────────────┬───────────────────┘
                           │
                           ▼
        ┌──────────────────────────────────────┐
        │           PROJECT VECTOR              │ ⟋S6
        └──────────────────┬───────────────────┘
                           │
                           ▼
        ┌──────────────────────────────────────┐
        │ ACQUIRE FEATURE VECTORS, ETC. OF      │ ⟋S8
        │ TARGET SAMPLE FOR ESTIMATION          │
        └──────────────────┬───────────────────┘
                           │
                           ▼
        ┌──────────────────────────────────────┐
        │ ESTIMATE CONTENT RATIO OF             │ ⟋S7
        │ CONSTITUENT ELEMENTS                  │
        └──────────────────┬───────────────────┘
                           │
                           ▼
                    ┌─────────────┐
                    │     END     │
                    └─────────────┘
```

FIG.8

FIG.9

## INTERNATIONAL SEARCH REPORT

| International application No. |
|---|
| **PCT/JP2024/023193** |

### A. CLASSIFICATION OF SUBJECT MATTER

*G01N 27/62*(2021.01)i
FI: G01N27/62 D

According to International Patent Classification (IPC) or to both national classification and IPC

### B. FIELDS SEARCHED

Minimum documentation searched (classification system followed by classification symbols)

G01N27/62; G01N5/00-5/04; G01N25/00-25/72; H01J49/00-49/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2022/270289 A1 (NATIONAL INSTITUTE FOR MATERIALS SCIENCE) 29 December 2022 (2022-12-29) | 1-14 |
| A | JP 2022-534468 A (DH TECHNOLOGIES DEVELOPMENT PTE LTD.) 01 August 2022 (2022-08-01) | 1-14 |
| A | JP 10-153560 A (RIGAKU DENKI CO., LTD.) 09 June 1998 (1998-06-09) | 1-14 |
| A | JP 2022-142846 A (TORAY RES CENTER KK) 03 October 2022 (2022-10-03) | 1-14 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 September 2024** | **17 September 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/023193**

| Patent document cited in search report | | | Publication date (day/month/year) | Patent family member(s) | | | Publication date (day/month/year) |
|---|---|---|---|---|---|---|---|
| WO | 2022/270289 | A1 | 29 December 2022 | EP | 4361624 | A1 | |
| JP | 2022-534468 | A | 01 August 2022 | US | 2022/0189754 | A1 | |
| | | | | WO | 2020/240506 | A1 | |
| | | | | EP | 3977628 | A1 | |
| | | | | CN | 113631920 | A | |
| JP | 10-153560 | A | 09 June 1998 | (Family: none) | | | |
| JP | 2022-142846 | A | 03 October 2022 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022270289 A

**Non-patent literature cited in the description**

- **SHIGA et al.** *Ultramicroscopy,* November 2016, vol. 170, 43-59
- *Chemical Science*, 2023, vol. 14, 5619-5626
- *Ultramicroscopy*, 2016, vol. 170, 43-59
- *IEEE Transactions on Signal Processing*, 2016, vol. 64 (23), 6254-6268